# EUROPEAN PATENT SPECIFICATION

(11) **EP 4 509 261 B1**
(45) Date of publication and mention of the grant of the patent: **05.08.2026**
(21) Application number: 22964389.5
(22) Date of filing: 01.11.2022
(51) Int. Cl.: B23Q 15/00, B23B 1/00, G05B 19/4097, G05B 19/4093

(54) **MACHINING SIMULATION DEVICE, NUMERICALLY CONTROLLED LATHE, MACHINE TOOL SYSTEM, WORKPIECE MACHINING METHOD, AND PROGRAM**
BEARBEITUNGSSIMULATIONSVORRICHTUNG, NUMERISCH GESTEUERTE DREHMASCHINE, WERKZEUGMASCHINENSYSTEM, WERKSTÜCKBEARBEITUNGSVERFAHREN UND PROGRAMM
DISPOSITIF DE SIMULATION D'USINAGE, TOUR À COMMANDE NUMÉRIQUE, SYSTÈME DE MACHINE-OUTIL, PROCÉDÉ D'USINAGE DE PIÈCE ET PROGRAMME

(43) Date of publication of application: 19.02.2025
(73) Proprietor: Yamazaki Mazak Corporation, Niwa-gun, Aichi 480-0197 (JP)
(72) Inventor: SAKA, Kotaro, Niwa-gun, Aichi 480-0197 (JP); KOIKE, Shunsuke, Niwa-gun, Aichi 480-0197 (JP); KATAYAMA, Takuro, Niwa-gun, Aichi 480-0197 (JP)
(74) Representative: TBK
(86) International application number: PCT/JP2022/040901
(87) International publication number: WO 2024/095367

(56) References cited:
- CN-A- 110 319 746
- JP-A- H04 131 910
- JP-A- H05 261 647
- JP-A- H1 145 106
- JP-A- S6 254 604
- JP-A- S60 180 749
- N N: "MASTERCAM MILL-TURN TUTORIAL", 1 June 2017 (2017-06-01), pages 1 - 198, XP093306648, Retrieved from the Internet <URL:https://colla.lv/wp-content/uploads/2018/02/MastercamMill-TurnTutorial.pdf>
- N N: "OKUMA Multus U", 1 June 2018 (2018-06-01), pages 1 - 17, XP093307029, Retrieved from the Internet <URL:https://peha-center.de/assets/product-brochures/Multus-U-Serie.pdf>

## Description

### Technical Field

The present invention relates to a machining simulation apparatus, a numerically controlled lathe, a machine tool system, a workpiece machining method, and a program.

### Background Art

A technique for machining a workpiece using a lathe is known.

A related technique includes a machining simulation apparatus disclosed in JP 2009-53823 A. The machining simulation apparatus disclosed in JP 2009-53823 A includes machining simulation means, a memory, reading means, and setting means. The machining simulation means performs, based on a machining program, a simulation of relative movement of a tool and an object to be machined. The memory stores a three-dimensional model of the tool and the object to be machined together with an identifier. The reading means reads the identifier of the three-dimensional model designated in the machining program. The setting means recalls, from the memory, the three-dimensional model having the identifier that matches the identifier that has been read, and sets the recalled three-dimensional model in the machining simulation means. In the machining simulation apparatus disclosed in JP 2009-53823 A, an origin of the shape of the object to be machined is set to an origin (X = 0, Y = 0, and Z = 0) of an imaginary three-dimensional space.

Furthermore, the tutorial of the "Mastercam Mill-Turn" refers to a CAD/CAM software module that programs multitasking CNC machines for combined milling and turning operations in a single setup. In order to set the program origin in Mastercam Mill-Turn, you must define the tool plane origin and work coordinate system (WCS) during the Job Setup. This involves specifying the stock, chuck, and the initial spindle setup, then defining the origin for both the left and right spindles where the part will be held. In particular, in the "Mill-Thurn"-system, the raw material (stock) and the chuck that will hold the part is to be defined. Then, in the Job Setup dialog, the Tool Plane Origin is set for the left/right spindle, typically to a face on the part geometry, like the right face. The Pickoff Point is specified, which is the exact location where the right spindle will grip the part. After setting up the origins, the Sync Manager in Code Expert is used to synchronize the operations and ensure they are properly aligned for the machine. Still further, according to the tutorial of the "Okuma Multus U"- system, setting the program origin involves using a CAM software to define the part and stock, then creating the machining environment in the Okuma's CAS (Collision Avoidance System) software by defining the chuck, jaws, and blank. The origin is set by aligning the face of the part with the X-axis within the CAM software's part setup.

### Summary of Invention

### Technical Problem

An object of the present invention is to provide a machining simulation apparatus that is capable of accurately setting a program origin on a machining simulation coordinate system, a numerically controlled lathe, a machine tool system, a workpiece machining method, and a program.

### Solution to Problem

According to the invention, the above object is achieved by a machining simulation apparatus according to claim 1, a numerically controlled lathe according to claim 5, a machine tool system according to claim 10, a method for machining a workpiece according to claim 1, and a program according to claim 12.

Further features and advantageous modifications are shown in the dependent claims.

A machining simulation apparatus according to some embodiments includes a processor and a communication circuit. The processor is configured to set a position of a program origin that is an origin on a machining simulation coordinate system, based on a machine model origin, on the machining simulation coordinate system, that corresponds to a machine origin of a numerically controlled lathe, a jaw model that is a shape model of a jaw mounted on a chuck of the numerically controlled lathe, and a workpiece model that is a shape model of a workpiece to be gripped by a plurality of the jaws, and to perform a machining simulation of virtually machining the workpiece model by executing a machining program using the program origin as a reference position. The communication circuit is configured to transmit data indicating the position of the program origin to the numerically controlled lathe.

A numerically controlled lathe according to some embodiments includes a second communication circuit, a second memory, a chuck, a plurality of jaws, a spindle, a rotary drive device, a moving device, and a second processor. The second communication circuit is configured to receive data indicating a position of a program origin that is an origin on a machining simulation coordinate system from a machining simulation apparatus. The machining simulation apparatus is configured to set the position of the program origin based on a machine model origin, on the machining simulation coordinate system, that corresponds to a machine origin of the numerically controlled lathe, a jaw model that is a shape model of a jaw mounted on the chuck of the numerically controlled lathe, and a workpiece model that is a shape model of a workpiece to be gripped by the plurality of jaws, and to perform a machining simulation of virtually machining the workpiece model by executing a machining program using the program origin as a reference position. The second memory is configured to store the machining program. The plurality of jaws are mounted on the chuck and configured to grip the workpiece. The spindle supports the chuck. The rotary drive device is configured to cause the spindle to rotate about a first axis. The moving device is configured to cause a first tool to move. The second processor is configured to set a position of a machining program origin in a machining program coordinate system, based on the position of the program origin, and to determine a movement path of the first tool with respect to the machining program origin by executing the machining program.

A machine tool system according to some embodiments includes the above-described machining simulation apparatus and the above-described numerically controlled lathe.

A method for machining a workpiece according to some embodiments includes setting a position of a program origin that is an origin on a machining simulation coordinate system, based on a machine model origin, on the machining simulation coordinate system, that corresponds to a machine origin of a numerically controlled lathe, a jaw model that is a shape model of a jaw mounted on a chuck of the numerically controlled lathe, and a workpiece model that is a shape model of a workpiece to be gripped by a plurality of the jaws. A machining simulation of virtually machining the workpiece model is performed by executing a machining program using the program origin as a reference position. data indicating the position of the program origin is transmitted to the numerically controlled lathe, and, in the numerically controlled lathe, a position of a machining program origin in a machining program coordinate system is set based on the received position of the program origin. The workpiece is machined by the numerically controlled lathe executing the machining program using the machining program origin as a reference position.

A program according to some embodiments is a program that causes a machining simulation apparatus to execute a machining simulation method. The machining simulation method includes setting a position of a program origin that is an origin on a machining simulation coordinate system, based on a machine model origin, on the machining simulation coordinate system, that corresponds to a machine origin of a numerically controlled lathe, a jaw model that is a shape model of a jaw mounted on a chuck of the numerically controlled lathe, and a workpiece model that is a shape model of a workpiece to be gripped by a plurality of the jaws. A machining simulation of virtually machining the workpiece model is performed by executing a machining program using the program origin as a reference position. Data indicating the position of the program origin is transmitted to the numerically controlled lathe.

### Effects of Invention

The present invention provides a machining simulation apparatus that is capable of accurately setting a program origin on a machining simulation coordinate system, a numerically controlled lathe, a machine tool system, a workpiece machining method, and a program.

### Brief Description of Drawings

[FIG 1] FIG 1 is a block diagram illustrating an example of a hardware configuration of a machining simulation apparatus according to a first embodiment.
[FIG 2] FIG 2 is a functional block diagram of a processor.
[FIG 3] FIG 3 is a diagram schematically illustrating a position of a machine origin in a numerically controlled lathe.
[FIG 4] FIG 4 is a diagram schematically illustrating a positional relationship between a machine model origin and a program origin in a machining simulation coordinate system.
[FIG 5] FIG 5 is a diagram schematically illustrating a positional relationship between the machine model origin and the program origin in the machining simulation coordinate system.
[FIG 6] FIG 6 is a diagram schematically illustrating how a simulation image is displayed on a display device.
[FIG 7] FIG 7 is a diagram schematically illustrating how the simulation image is displayed on the display device.
[FIG 8] FIG 8 is a schematic perspective diagram schematically illustrating the numerically controlled lathe according to the first embodiment.
[FIG 9] FIG 9 is a block diagram illustrating an example of a hardware configuration of a control unit of the numerically controlled lathe.
[FIG 10] FIG 10 is a diagram schematically illustrating a positional relationship between the machine origin and a machining program origin in a machining program coordinate system.
[FIG 11] FIG 11 is a block diagram illustrating an example of the hardware configuration of the control unit of the numerically controlled lathe.
[FIG 12] FIG 12 is a diagram schematically illustrating how an offset amount is displayed on the display device.
[FIG 13] FIG 13 is a diagram schematically illustrating how a setting window of a jaw model is displayed on the display device.
[FIG 14] FIG 14 is a diagram schematically illustrating how a setting window of a workpiece model is displayed on the display device.
[FIG 15] FIG 15 is a diagram schematically illustrating how a workpiece model creation window is displayed on the display device.
[FIG 16] FIG 16 is a diagram schematically illustrating how a setting window of a chuck model is displayed on the display device.
[FIG 17] FIG 17 is a diagram schematically illustrating how an assembly model in which the chuck model, the jaw model, and the workpiece model are assembled is displayed on the display device.
[FIG 18] FIG 18 is a diagram schematically illustrating a positional relationship between the machine model origin and the program origin in the machining simulation coordinate system.
[FIG 19] FIG 19 is a diagram schematically illustrating a positional relationship between the machine model origin and the program origin in the machining simulation coordinate system.
[FIG 20] FIG 20 is a diagram schematically illustrating how a second offset amount is displayed on a second display device.
[FIG 21] FIG 21 is a diagram schematically illustrating how first default data specifying the shape of a jaw is displayed on the second display device in an editable form.
[FIG 22] FIG 22 is a diagram schematically illustrating how a message that recommends to execute a machining simulation again is displayed on the second display device.
[FIG 23] FIG 23 is a diagram schematically illustrating how second default data specifying the shape of a workpiece is displayed on the second display device in an editable form.
[FIG 24] FIG 24 is a diagram schematically illustrating how a message that recommends to execute the machining simulation again is displayed on the second display device.
[FIG 25] FIG 25 is a diagram schematically illustrating a machine tool system according to the first embodiment.
[FIG 26] FIG 26 is a flowchart illustrating an example of a machining simulation method according to the first embodiment.
[FIG 27] FIG 27 is a flowchart illustrating an example of a workpiece machining method according to the first embodiment.
[FIG 28] FIG 28 is a diagram schematically illustrating an example of a non-volatile storage medium that stores a program.

### Description of Embodiments

Hereinafter, a machining simulation apparatus 1, a numerically controlled lathe 8, a machine tool system 100, a machining simulation method, a workpiece machining method, and a program (more specifically, a computation program 41) according to an embodiment will be described with reference to the drawings. In the following description of the embodiments, identical reference numerals are given to portions and members having identical functions, and repetitive descriptions of the portions and members with the identical reference numerals are omitted.

### (First Embodiment)

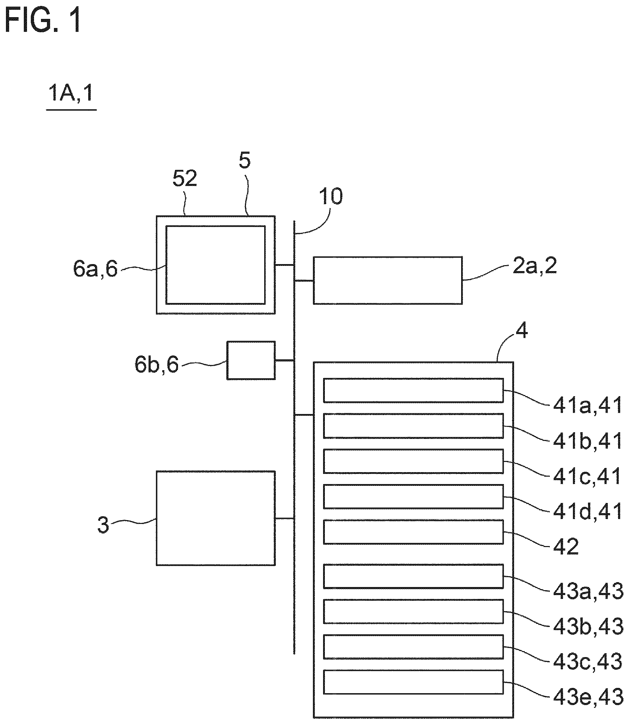

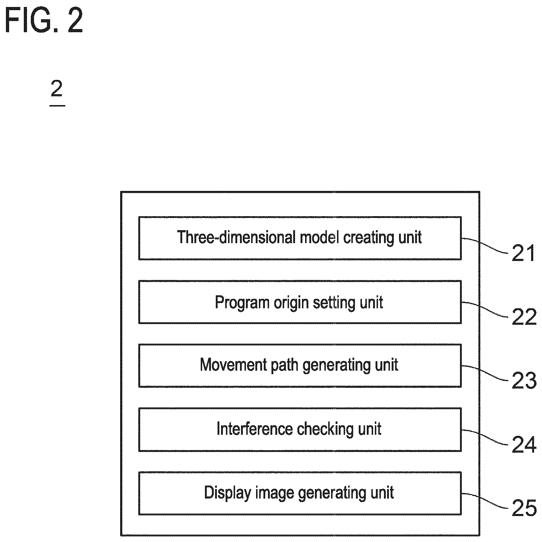

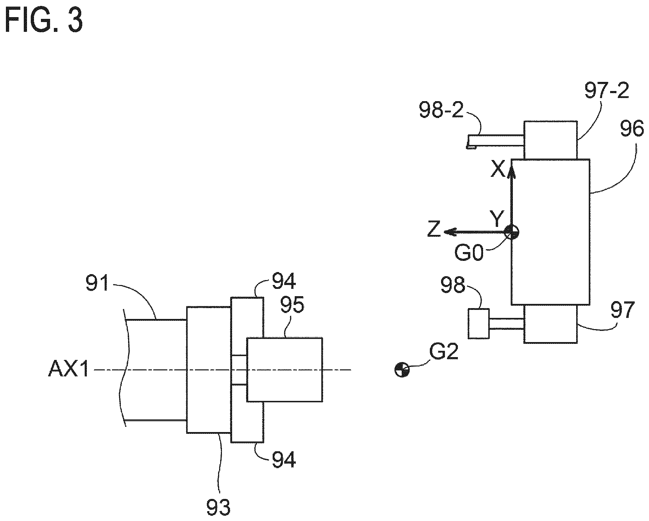

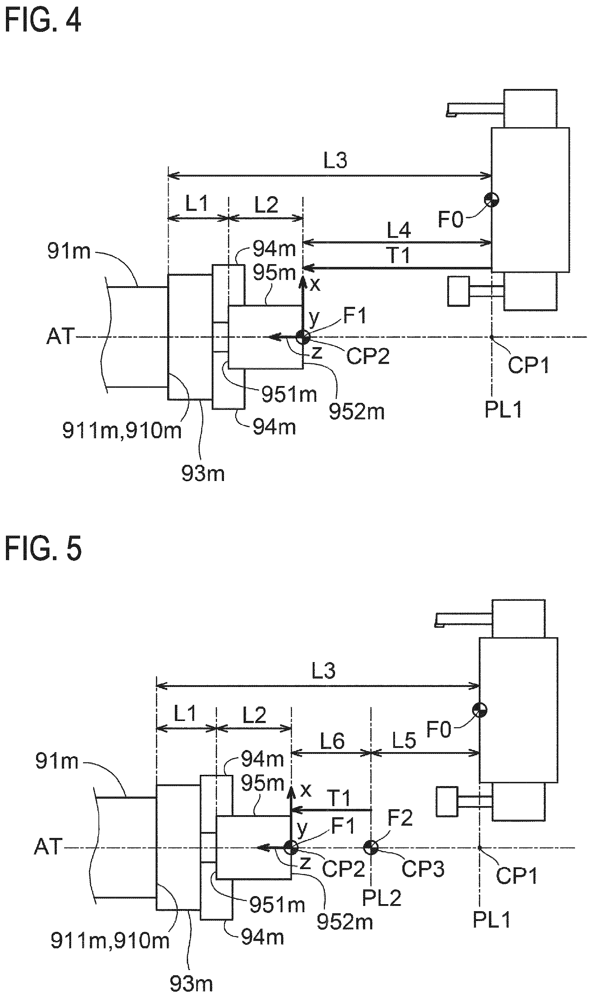

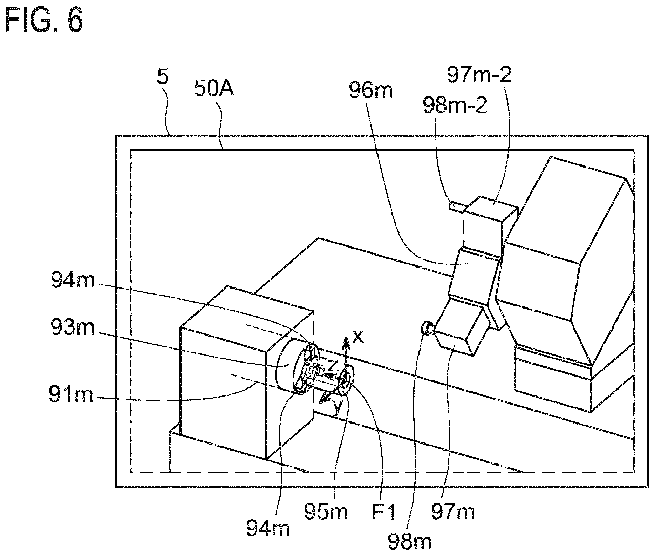

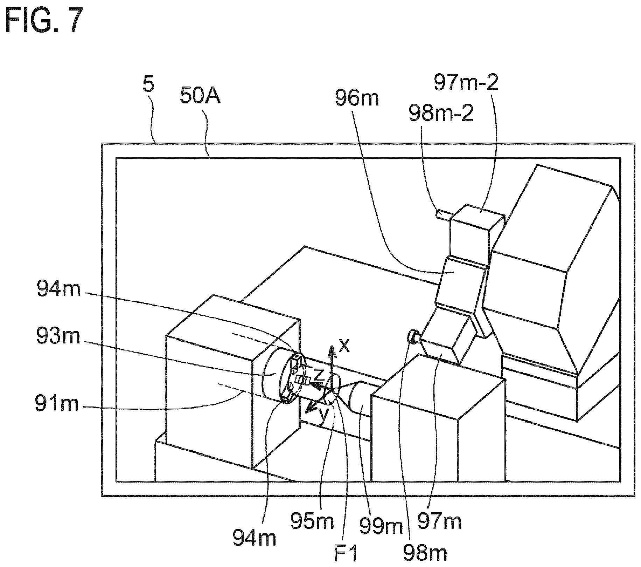

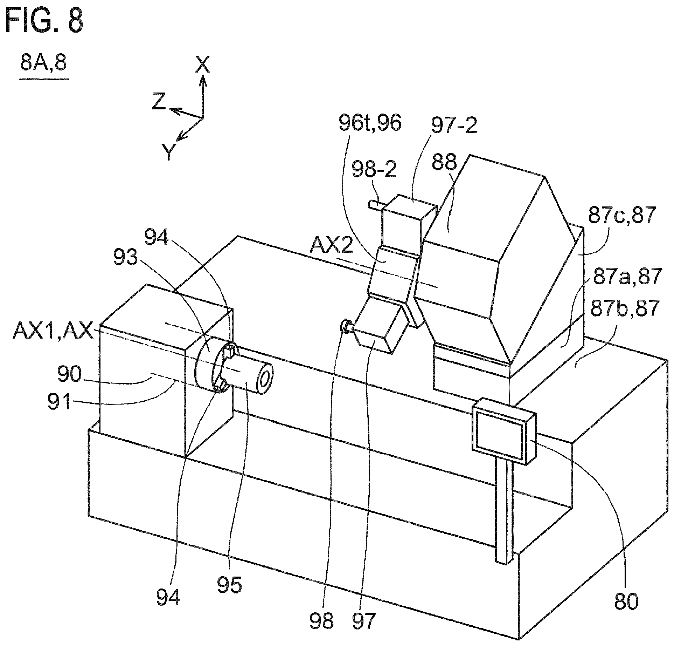

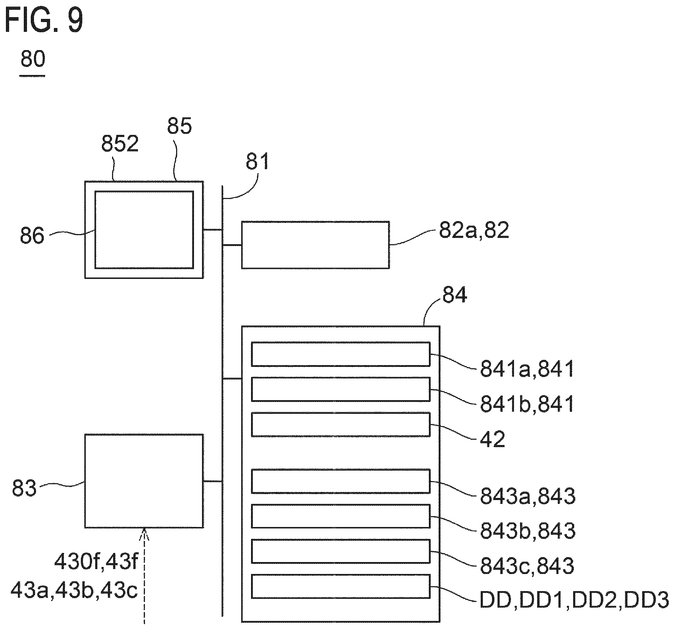

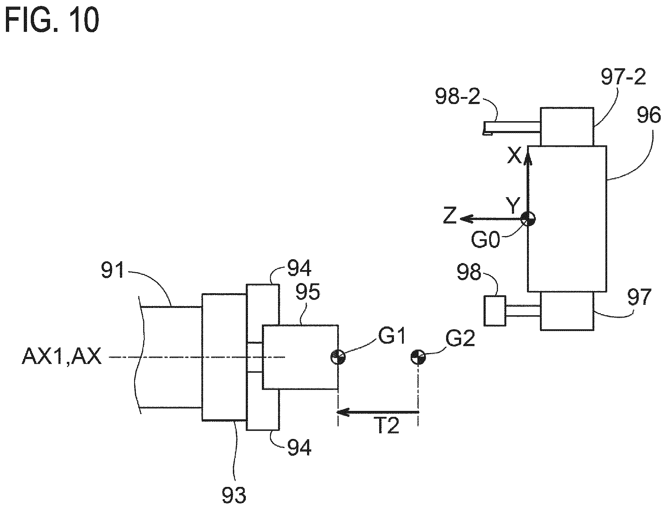

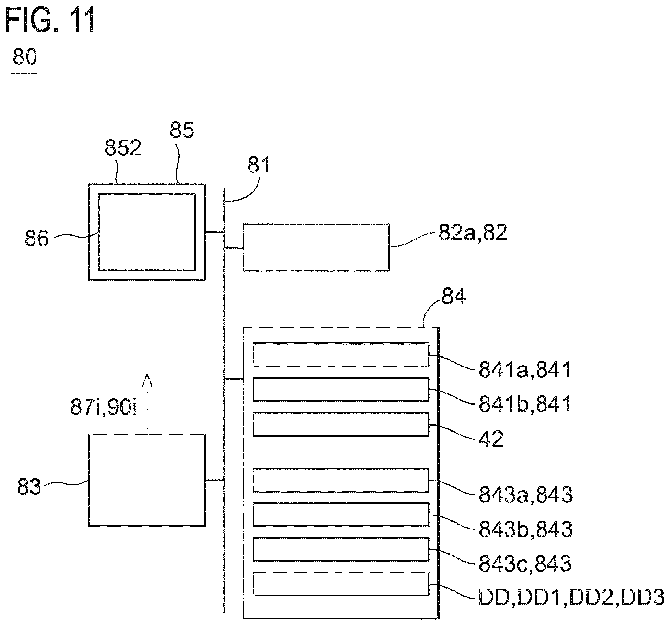

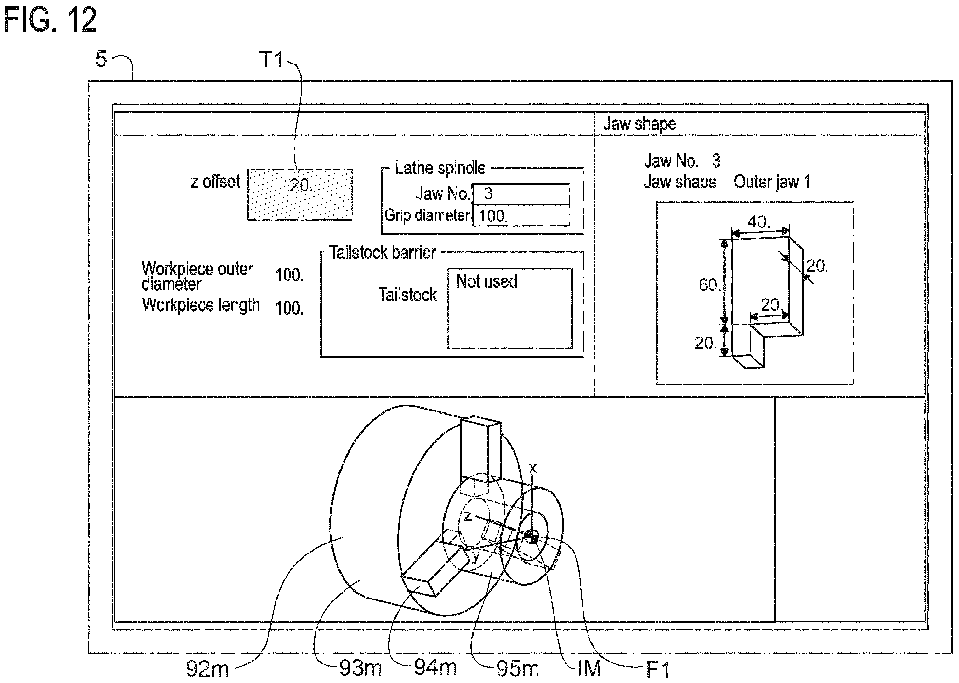

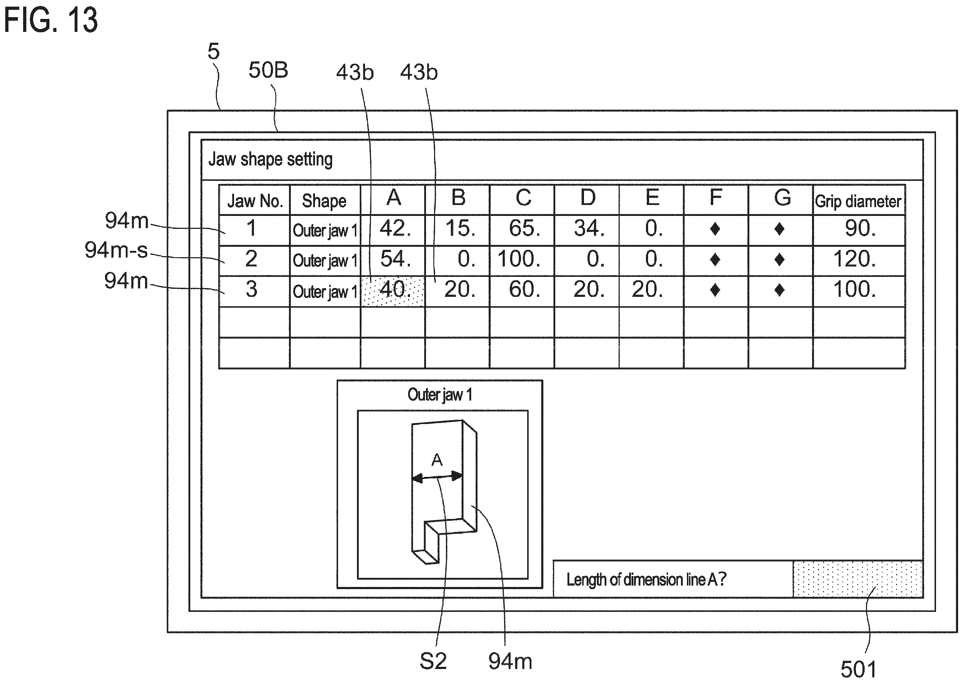

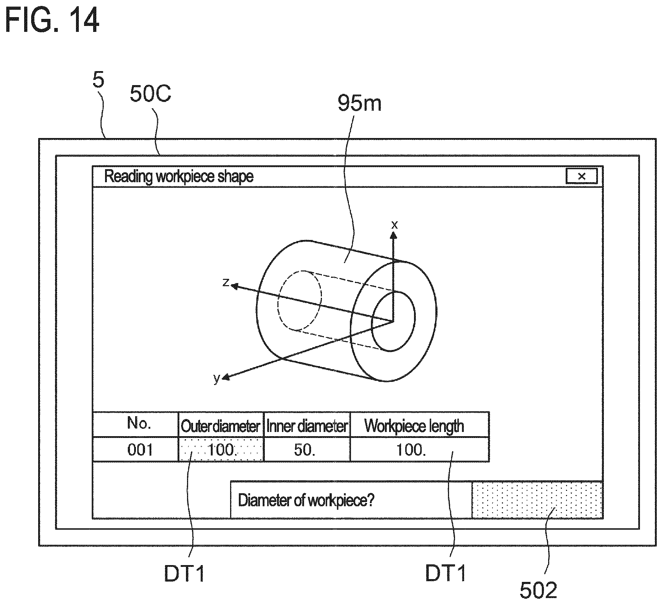

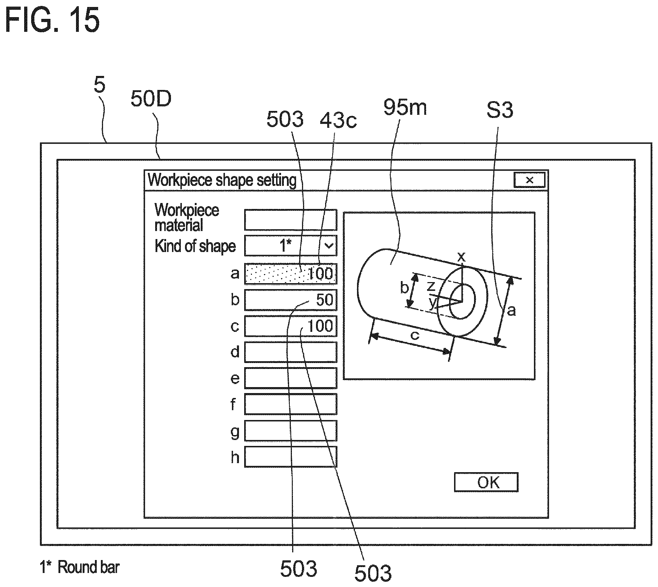

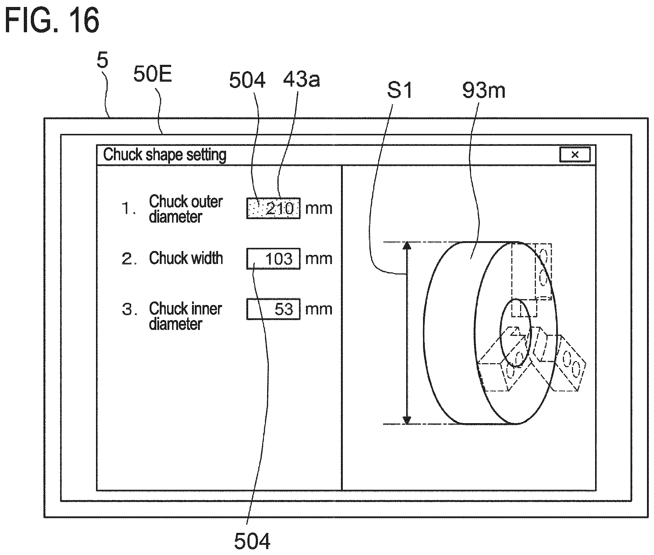

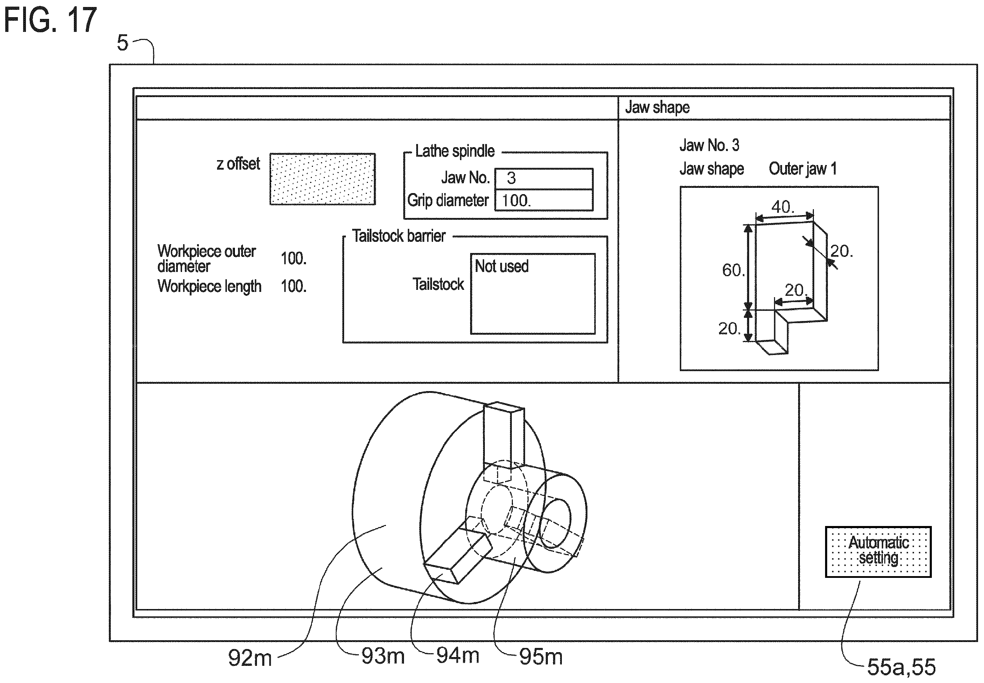

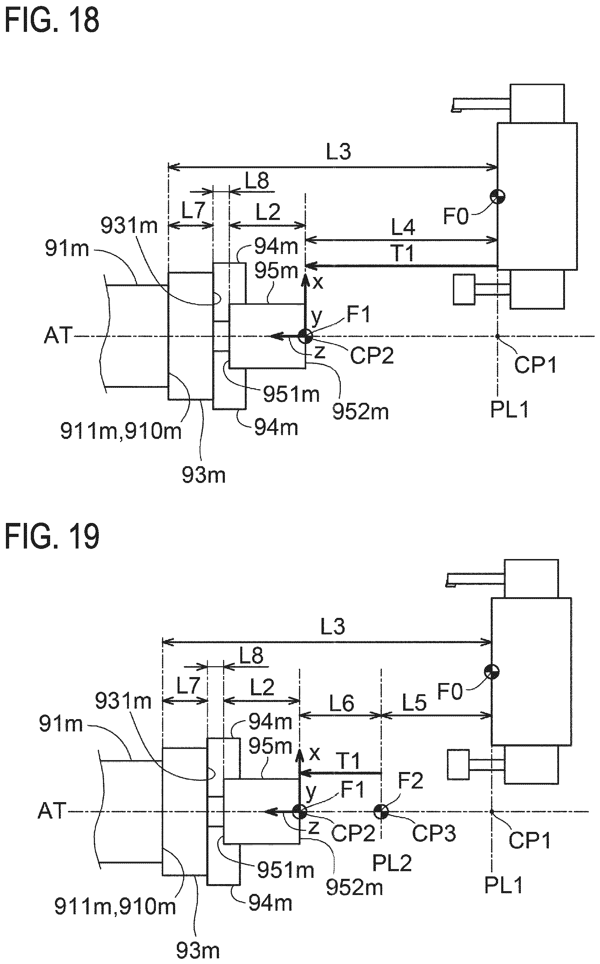

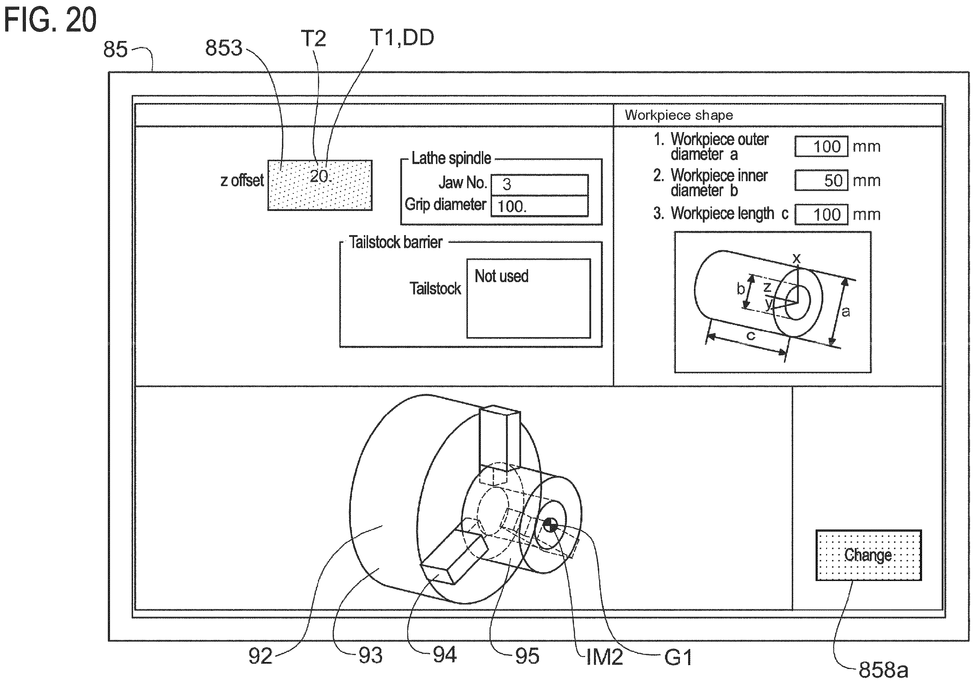

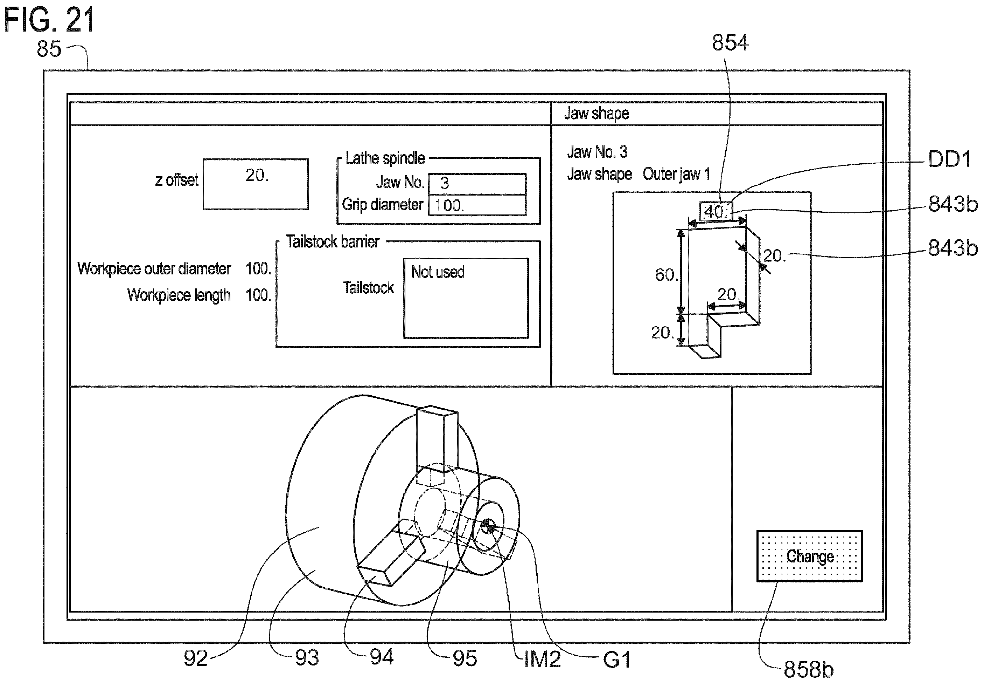

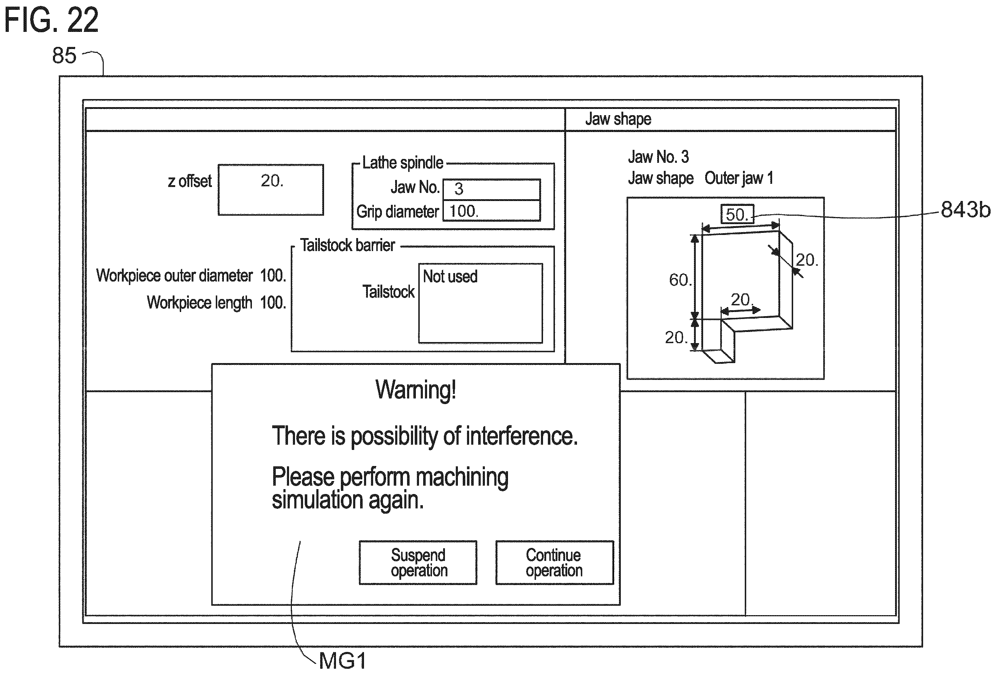

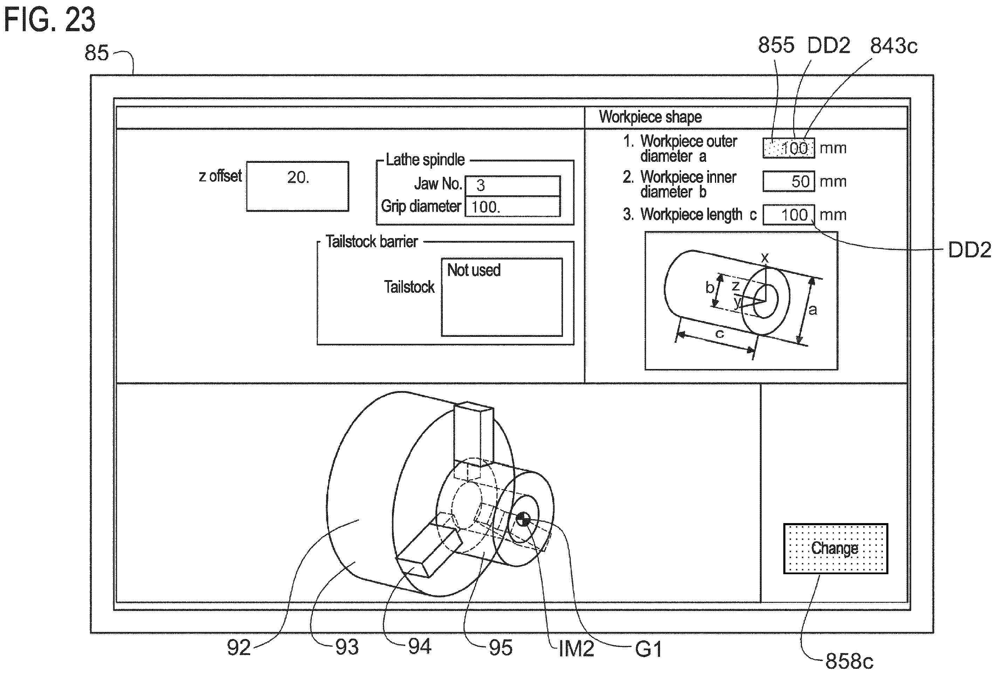

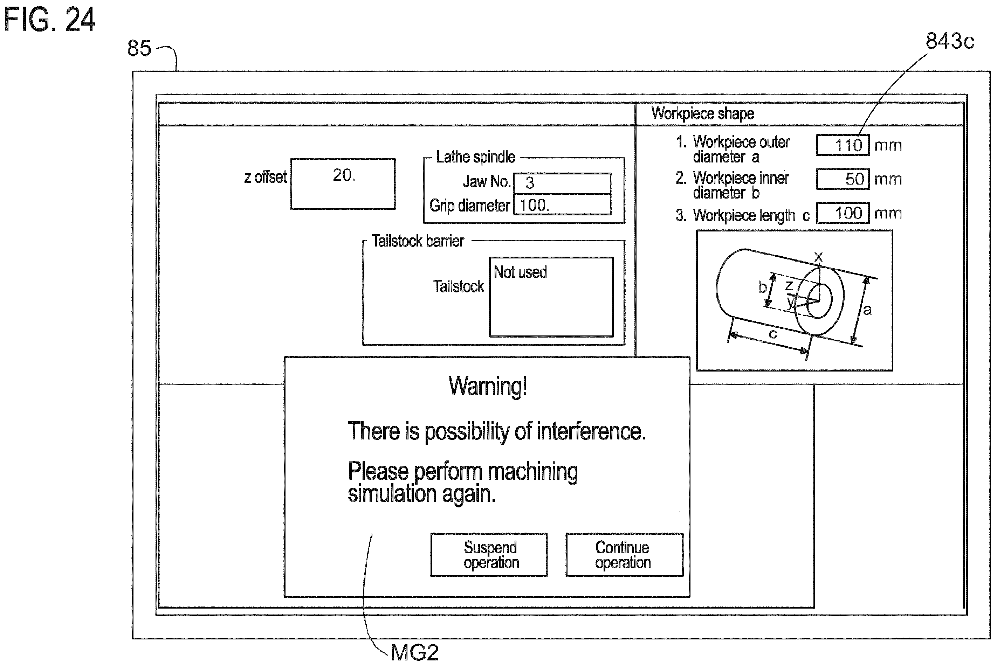

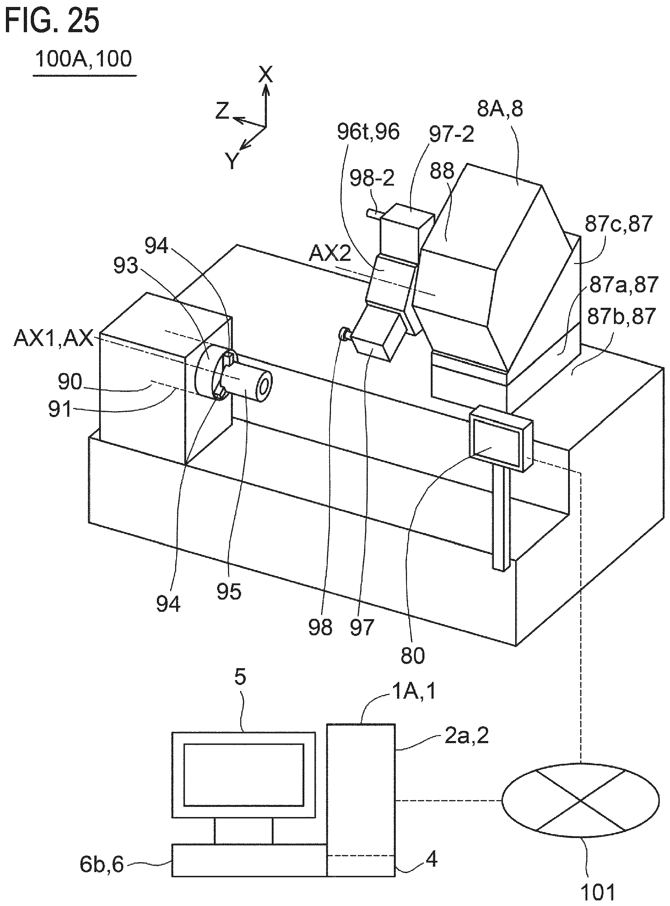

A machining simulation apparatus 1A, a numerically controlled lathe 8A, and a machine tool system 100A according to a first embodiment will be described with reference to Figs 1 to 25. FIG 1 is a block diagram illustrating an example of a hardware configuration of the machining simulation apparatus 1A according to the first embodiment. FIG 2 is a functional block diagram of a processor 2. FIG 3 is a diagram schematically illustrating a position of a machine origin G0 in a numerically controlled lathe. FIGs. 4 and 5 are diagrams each schematically illustrating a positional relationship between a machine model origin F0 and a program origin F1 in a machining simulation coordinate system. FIGs. 6 and 7 are diagrams each schematically illustrating how a simulation image 50A is displayed on a display device 5. FIG 8 is a schematic perspective diagram schematically illustrating the numerically controlled lathe 8A according to the first embodiment. FIG 9 is a block diagram illustrating an example of a hardware configuration of a control unit 80 of the numerically controlled lathe 8A. FIG 10 is a diagram schematically illustrating a positional relationship between the machine origin G0 and a machining program origin G1 in a machining program coordinate system. FIG. 11 is a block diagram illustrating an example of a hardware configuration of the control unit 80 of the numerically controlled lathe 8A. FIG 12 is a diagram schematically illustrating how an offset amount T1 is displayed on the display device 5. FIG 13 is a diagram schematically illustrating how a setting window 50B of a jaw model 94m is displayed on the display device 5. FIG 14 is a diagram schematically illustrating how a setting window 50C of a workpiece model 95m is displayed on the display device 5. FIG 15 is a diagram schematically illustrating how a workpiece model creation window 50D is displayed on the display device 5. FIG 16 is a diagram schematically illustrating how a setting window 50E of a chuck model 93m is displayed on the display device 5. FIG 17 is a diagram schematically illustrating how an assembly model 92m in which the chuck model 93m, the jaw model 94m, and the workpiece model 95m are assembled is displayed on the display device 5. FIGs. 18 and 19 are diagrams each schematically illustrating a positional relationship between the machine model origin F0 and the program origin F1 in the machining simulation coordinate system. FIG. 20 is a diagram schematically illustrating how a second offset amount T2 is displayed on a second display device 85. FIG 21 is a diagram schematically illustrating how first default data DD1 specifying the shape of a jaw 94 is displayed on the second display device 85 in an editable form. FIG 22 is a diagram schematically illustrating how a message MG1 that recommends to execute a machining simulation again is displayed on the second display device 85. FIG 23 is a diagram schematically illustrating how second default data DD2 specifying the shape of a workpiece 95 is displayed on the second display device 85 in an editable form. FIG 24 is a diagram schematically illustrating how a message MG2 that recommends to execute the machining simulation again is displayed on the second display device 85. FIG 25 is a diagram schematically illustrating the machine tool system 100A according to the first embodiment.

### (Machining Simulation Apparatus 1A)

As illustrated in FIG. 1, the machining simulation apparatus 1A includes the processor 2 and a communication circuit 3. Additionally, the machining simulation apparatus 1A may include a memory 4, the display device 5, and an input device 6. The input device 6 may be incorporated in the display device 5 (more specifically, the display device 5 may be a touch panel display 52 with a built-in input device 6a). Alternatively or additionally, the machining simulation apparatus 1A may include an input device 6b (for example, a button, a switch, a lever, a pointing device, and a keyboard) provided separately from the display device 5.

The machining simulation apparatus 1A may include one computer. Alternatively, a plurality of computers may operate together to function as the machining simulation apparatus 1A. In other words, the machining simulation apparatus 1A may include one computer or a plurality of computers.

In an example illustrated in FIG. 1, the processor 2, the memory 4, the communication circuit 3, the display device 5, and/or the input device 6 are coupled to each other via a bus 10. The processor 2 includes at least one processor 2a (for example, at least one CPU).

The memory 4 includes a storage medium from which the processor 2 is readable. The memory 4 may include a non-volatile or volatile semiconductor memory, a magnetic disk, or other forms of memory. The non-volatile or volatile semiconductor memory includes, for example, a RAM, a ROM, and a flash memory. The memory 4 stores the computation program 41 (for example, a three-dimensional model creating program 41a, a program origin setting program 41b, a simulation computation program 41c, and a display program 41d), a machining program 42 used to machine the workpiece 95 into a desired shape (more specifically, the machining program 42 to be executed by the numerically controlled lathe 8A to machine the workpiece 95 into a desired shape), and data 43 (for example, first dimension data 43a specifying the shape of a chuck model, second dimension data 43b specifying the shape of a jaw model, third dimension data 43c specifying the shape of a workpiece model, and position data 43e of a machine model origin).

The memory 4 may be distributed to a plurality of locations. For example, a memory that stores the machining program 42 may be provided separately from a memory that stores the computation program 41 or the data 43.

A part of the memory 4 may be located at a position far from the communication circuit 3. In other words, when the processor 2 executes the computation program 41, the memory 4 may provide at least part of the computation program 41 or part of the data 43 to the processor 2 via the communication circuit 3. At least part of the data 43 may be input by an operator via the input device 6, and the data 43 that has been input may be stored in the memory 4. Alternatively or additionally, at least part of the data 43 may be transmitted to the machining simulation apparatus 1A from another computer. In this case, the processor 2 stores the data 43 received via the communication circuit 3 in the memory 4.

As illustrated in FIG 2, the processor 2 may include a three-dimensional model creating unit 21, a program origin setting unit 22, a movement path generating unit 23, an interference checking unit 24, and a display image generating unit 25. More specifically, the processor 2 may function as the three-dimensional model creating unit 21, the program origin setting unit 22, the movement path generating unit 23, the interference checking unit 24, and the display image generating unit 25 by executing the computation program 41, which is stored in the memory 4.

As illustrated in FIG 3, the machine origin G0 of the numerically controlled lathe 8A is an origin on a machine coordinate system of the numerically controlled lathe 8A. The machine origin G0 is a reference point of the numerically controlled lathe 8A that does not depend on the shape of the workpiece 95. In an example illustrated in FIG 3, the machine coordinate system (X, Y, Z orthogonal coordinate system) of the numerically controlled lathe 8A is set with respect to the machine origin G0. The position of the machine origin G0 may vary from one numerically controlled lathe 8A to another. In other words, the position of the machine origin G0 is not limited to the position illustrated in FIG. 3.

In the example illustrated in FIG 3, the jaw 94 is mounted on a chuck 93 of the numerically controlled lathe 8A. The chuck 93 is mounted on a spindle 91 that rotates about a first axis AX1. As illustrated in FIG 4, a shape model of the jaw 94 (hereinafter, referred to as the "jaw model 94m") has substantially the same shape as the jaw 94 in the machining simulation coordinate system. A shape model of the chuck 93 (hereinafter, referred to as the "chuck model 93m") has substantially the same shape as the chuck 93 in the machining simulation coordinate system.

In the example illustrated in FIG 3, the workpiece 95 is gripped by a plurality of jaws 94 mounted on the chuck 93. As illustrated in FIG 4, a shape model of the workpiece 95 (hereinafter, referred to as the "workpiece model 95m") has substantially the same shape as the workpiece 95 in the machining simulation coordinate system.

The processor 2 (more specifically, the program origin setting unit 22) sets the position of the program origin F1 by executing the program origin setting program 41b. The program origin F1 is an origin on the machining simulation coordinate system. More specifically, the processor 2 sets the position of the program origin F1 (refer to FIG 4), which is the origin on the machining simulation coordinate system, based on the machine model origin F0 (refer to FIG 4), on the machining simulation coordinate system, that corresponds to the machine origin G0 (refer to FIG 3) of the numerically controlled lathe 8A, the above-described jaw model 94m, and the above-described workpiece model 95m.

As illustrated in FIG 4, the machine model origin F0 is a point that simulates the machine origin G0 of the numerically controlled lathe 8A on the machining simulation coordinate system. Note that the position data 43e of the machine model origin F0 is preferably stored in the memory 4 in advance.

In an example illustrated in FIG 4, the distance between a reference face 910m that has been previously set (for example, a distal end face 911m of a shape model 91m of the spindle 91) and a contact surface between the jaw model 94m and a proximal end face 951m of the workpiece model 95m is defined as a distance L1. The distance between the proximal end face 951m of the workpiece model 95m and a distal end face 952m of the workpiece model 95m is defined as a distance L2. The distance between the reference face 910m that has been previously set (for example, the distal end face 911m of the shape model 91m of the spindle 91) and the machine model origin F0 is defined as a distance L3. The distance between the machine model origin F0 and the program origin F1 in a direction along the rotation axis AT of the chuck model 93m is defined as a distance L4. Furthermore, an intersection between the rotation axis AT of the chuck model 93m and a first face PL1 that passes through the machine model origin F0 and is orthogonal to the rotation axis AT is defined as an intersection CP1.

The processor 2 is capable of calculating the above-described distance L1 using, for example, position data of the reference face 910m stored in the memory 4, the first dimension data 43a, which is stored in the memory 4 and specifies the shape of the chuck model 93m, and the second dimension data 43b, which is stored in the memory 4 and specifies the shape of the jaw model 94m. The processor 2 is also capable of calculating the above-described distance L2 using the third dimension data 43c, which is stored in the memory 4 and specifies the shape of the workpiece model 95m. The processor 2 is also capable of calculating the above-described distance L3 using, for example, the position data of the reference face 910m, which is stored in the memory 4, and the position data 43e of the machine model origin F0, which is stored in the memory 4. Furthermore, the processor 2 is capable of calculating the above-described distance L4 using a mathematical expression: distance L4 = distance L3 - distance L1 - distance L2. Note that, the distance L4 is calculated using a model in which a bottom of the jaw model 94m is in contact with the proximal end face 951m of the workpiece model 95m.

In the example illustrated in FIG 4, the processor 2 (more specifically, the program origin setting unit 22) is capable of setting, based on the machine model origin F0, the jaw model 94m, and the workpiece model 95m, the position of the program origin F1 to a position that is moved by the distance L4 from the above-described intersection CP1 toward the distal end face 952m of the workpiece model 95m along the above-described rotation axis AT. In this manner, the processor 2 accurately sets the position of the program origin F1 to a predetermined position of the workpiece model (for example, an intersection CP2 between the above-described rotation axis AT and the distal end face 952m of the workpiece model) regardless of the diversity of the shape of the jaw model and the diversity of the shape of the workpiece model.

Additionally, as illustrated in FIG 3, when a reference point G2 (for example, a reference workpiece origin) positionally fixed with respect to the machine origin G0 is set, a reference point F2 (for example, a reference workpiece model origin) positionally fixed with respect to the machine model origin F0 may be set in the machining simulation coordinate system (refer to FIG 5). The position data of the reference point F2 may be stored in the memory 4. The reference point F2 (refer to FIG 5) is a point corresponding to the above-described reference point G2 (refer to FIG. 3) in the machining simulation coordinate system.

In an example illustrated in FIG 5, the distance between the above-described reference point F2 and the machine model origin F0 in a direction along the above-described rotation axis AT is defined as a distance L5. The distance between the above-described reference point F2 and the program origin F1 in the direction along the above-described rotation axis AT is defined as a distance L6. Furthermore, an intersection between the above-described rotation axis AT and a second face PL2 that passes through the reference point F2 and is orthogonal to the rotation axis AT is defined as an intersection CP3.

The processor 2 is capable of calculating the above-described distance L5 using the position data of the reference point F2 and the position data 43e of the machine model origin F0, which are stored in the memory 4. The processor 2 is also capable of calculating the above-described distance L6 using a mathematical expression: distance L6 = distance L3 - distance L1 - distance L2 - distance L5. Note that, the distance L6 is calculated using a model in which a bottom of the jaw model 94m is in contact with the proximal end face 951m of the workpiece model 95m.

In the example illustrated in FIG 5, the processor 2 (more specifically, the program origin setting unit 22) is capable of setting, based on the machine model origin F0, the jaw model 94m, and the workpiece model 95m, the position of the program origin F1 to a position that is moved by the distance L6 from the above-described intersection CP3 toward the distal end face 952m of the workpiece model 95m along the above-described rotation axis AT. In this manner, the processor 2 accurately sets the position of the program origin F1 to a predetermined position of the workpiece model (for example, the intersection CP2 between the above-described rotation axis AT and the distal end face 952m of the workpiece model) regardless of the diversity of the shape of the jaw model and the diversity of the shape of the workpiece model.

In the example illustrated in FIG 4 or 5, the processor 2 sets the machining simulation coordinate system (for example, an x, y, z orthogonal coordinate system) with respect to the program origin F1.

In an example illustrated in FIG 6, the processor 2 performs a machining simulation of virtually machining the workpiece model 95m, which is the shape model of the workpiece 95, by executing the machining program 42 using the program origin F1 as a reference position. As used herein, the processor 2 executing the machining program 42 encompasses the processor 2 executing the machining program 42 via the computation program 41 (more specifically, the simulation computation program 41c). In other words, the machining program 42 may be processed (in other words, analyzed) by the processor 2 executing the computation program 41. The processor 2 may perform the machining simulation of virtually machining the workpiece model 95m, based on the processing (in other words, based on the analysis).

The processor 2 may display the simulation image 50A on the display device 5 by executing the machining program 42 via the simulation computation program 41c, which is stored in the memory 4, and also executing the display program 41d, which is stored in the memory 4. The display program 41d may be a program different from the simulation computation program 41c, or may be a program incorporated in the simulation computation program 41c.

In an example illustrated in FIG 8, the numerically controlled lathe 8A includes the plurality of jaws 94, the chuck 93, the spindle 91, a tool rest 96, a first tool holding unit 97, and a first tool 98. The plurality of jaws 94 grip the workpiece 95. The chuck 93 supports the plurality of jaws 94. The spindle 91 supports the chuck 93 and rotates about the first axis AX1. The first tool holding unit 97 is held by the tool rest 96. The first tool 98 is held by the first tool holding unit 97. The numerically controlled lathe 8A may include another tool holding unit 97-2 and another tool 98-2. The other tool holding unit 97-2 may be held by the tool rest 96. The other tool 98-2 may be held by the other tool holding unit 97-2. The numerically controlled lathe 8A may also include a tailstock that presses a distal end face of the workpiece 95.

In the example illustrated in FIG 6, the simulation image 50A includes at least an image of the workpiece model 95m corresponding to the workpiece 95, images of the plurality of jaw models 94m corresponding to the plurality of jaws 94, an image of a tool rest model 96m corresponding to the tool rest 96, an image of a first tool holding unit model 97m corresponding to the first tool holding unit 97, and an image of a first tool model 98m corresponding to the first tool 98. The simulation image 50A may include an image of another tool holding unit model 97m-2 corresponding to the other tool holding unit 97-2 and an image of another tool model 98m-2 corresponding to the other tool 98-2. Additionally, as illustrated in FIG 7, the simulation image 50A may include an image of a tailstock model 99m corresponding the tailstock.

The processor 2 (more specifically, the movement path generating unit 23) generates movement path data of the first tool model 98m with respect to the program origin F1 in the machining simulation coordinate system by executing the machining program 42 via the simulation computation program 41c, which is stored in the memory 4. As the simulation image 50A, the processor 2 may display, on the display device 5, a moving image of the first tool model 98m and plurality of models (96m, 97m, 97m-2, and 98m-2) that move together with the first tool model 98m with respect to the workpiece model 95m along the path designated by the movement path data by executing the simulation computation program 41c and the display program 41d, which are stored in the memory 4. In the moving image, the simulated machining of the workpiece model 95m by the first tool model 98m is performed.

The processor 2 (more specifically, the interference checking unit 24) checks whether there is an abnormal interference, in the machining simulation coordinate system, between the first tool model 98m, which moves along the path designated by the above-described movement path data, and other plurality of models (for example, the workpiece model 95m and the tailstock model 99m) and between the plurality of models that move together with the first tool model 98m and other plurality of models (for example, the workpiece model 95m and the tailstock model 99m) by executing the simulation computation program 41c, which is stored in the memory 4. As used herein, the term "abnormal interference" means an interference between models that are not supposed to interfere with each other. For example, the term "abnormal interference" includes (1) an interference between the first tool holding unit model 97m mounted on the tool rest model 96m and the workpiece model 95m, (2) an interference between the other tool holding unit model 97m-2 different from the first tool holding unit model 97m, which is mounted on the tool rest model 96m, or the other tool model 98m-2 different from the first tool model 98m and the workpiece model 95m, and (3) an interference between the first tool model 98m that moves along the path designated by the above-described movement path data or the plurality of models that move together with the first tool model 98m and the tailstock model 99m.

The communication circuit 3 transmits, to the numerically controlled lathe 8A (refer to FIG 8), data 43f indicating the position of the above-described program origin F1 (refer to FIG 4 or 5), which is set by the processor 2.

In the machining simulation apparatus 1A according to the first embodiment, the position of the program origin F1, which is the origin on the machining simulation coordinate system, is set based on the machine model origin F0, the jaw model 94m, and the workpiece model 95m. In this case, the position of the program origin F1 (refer to FIG 4 or 5) with respect to the machine model origin F0 is accurately set on the machining simulation coordinate system regardless of the diversity of the shape of the jaw model and the diversity of the shape of the workpiece model. This allows the machining simulation to be performed with higher accuracy with respect to the program origin F1 (refer to FIG 6 or 7). Performing the highly accurate machining simulation omits or simplifies an interference check performed using the numerically controlled lathe 8A. The omission or the simplifying of the interference check at a machining site improves an operating rate of the numerically controlled lathe 8A. Further, an operator workload at the machining site is reduced.

In the machining simulation apparatus 1A according to the first embodiment, the program origin F1 on the machining simulation coordinate system is accurately set, and the data 43f indicating the position of the program origin F1 that has been accurately set is transmitted to the numerically controlled lathe 8A. In this case, the numerically controlled lathe 8A sets a machining program origin by utilizing the program origin F1 on the machining simulation coordinate system. This eliminates the need for or simplifies an operation of actually measuring the reference position of the workpiece 95 in order to set the machining program origin. The reduction in preparation work performed at the machining site further improves the operating rate of the numerically controlled lathe 8A. The operator workload at the machining site is further reduced. The consumption of energy involved in the preparation work is reduced. This also reduces load on the environment.

In contrast to the numerically controlled lathe 8A that needs to be installed at the machining site, it is possible to install the machining simulation apparatus 1A at any of the machining site, office, and operator's home. When the machining simulation apparatus 1A is installed at a location other than the machining site, a working environment of the operator is improved.

Further, part of the preparation work is digitized, and digital transformation (DX) is promoted. In other words, using the machining simulation apparatus 1A according to the first embodiment promotes digital transformation to improve the work flow.

### (Numerically Controlled Lathe 8A)

Next, the numerically controlled lathe 8A according the first embodiment will be described.

In the example illustrated in FIG 8, the numerically controlled lathe 8A includes the control unit 80, the chuck 93, the jaws 94, the spindle 91, a rotary drive device 90, and a moving device 87 that moves a tool. The numerically controlled lathe 8A may include the tool rest 96 (for example, a turret 96t). The tool holding unit that holds the tool is mounted on the tool rest 96. The numerically controlled lathe 8A may include a second rotary drive device 88. The second rotary drive device 88 causes the turret 96t to rotate about a second axis AX2. The numerically controlled lathe 8A (more specifically, the tool rest 96) may include a third rotary drive device that causes the tool to rotate around a tool axis.

The chuck 93 supports the jaws 94. The chuck 93 causes the jaws 94 to move in a direction toward a rotation axis AX of the chuck 93 and to move in a direction away from the rotation axis AX.

The plurality of jaws 94 are mounted on the chuck 93 and grip the workpiece 95.

The spindle 91 supports the chuck 93. Further, the spindle 91 rotates about the first axis AX1 by a driving force of the rotary drive device 90.

The rotary drive device 90 causes the spindle 91 to rotate about the first axis AX1. The first axis AX1 is coaxial with the rotation axis AX of the chuck 93. The rotary drive device 90 causes the spindle 91 to rotate about the first axis AX1. This causes the spindle 91, the chuck 93, the plurality of jaws 94, and the workpiece 95 to integrally rotate about the first axis AX1.

The moving device 87 causes the first tool 98 to move. The first tool 98 machines the workpiece 95. The moving device 87 causes the first tool 98, the first tool holding unit 97, which holds the first tool 98, and the tool rest 96 (for example, the turret 96t), which supports the first tool holding unit 97 to move one-, two- or three-dimensionally.

As illustrated in FIG 8, the moving device 87 may include a first moving device 87a. The first moving device 87a causes the tool rest 96 (for example, the turret 96t) to move in a direction (in other words, a Y-axis direction) that is perpendicular to the first axis AX1 and parallel to a horizontal plane. Additionally, the moving device 87 may include a second moving device 87b. The second moving device 87b causes the tool rest 96 (for example, the turret 96t) to move in a direction (in other words, a Z-axis direction) that is parallel to the first axis AX1. Further, the moving device 87 may include a third moving device 87c. The third moving device 87c changes the height of the tool rest 96 (for example, the turret 96t).

The control unit 80 controls control target devices. More specifically, the control unit 80 controls each of the plurality of control target devices (for example, the rotary drive device 90, the moving device 87, and the second rotary drive device 88) by transmitting a control command to each of the plurality of control target devices. The control unit 80 may be distributed to a plurality of locations. In other words, the control unit may be divided into a plurality of sub-units that are communicable with each other.

In an example illustrated in FIG 9, the numerically controlled lathe 8A (more specifically, the control unit 80) includes a second processor 82, a second communication circuit 83, a second memory 84, and the second display device 85. Additionally, the numerically controlled lathe 8A (more specifically, the control unit 80) may include a second input device 86. The second input device 86 may be incorporated in the second display device 85 (more specifically, the second display device 85 may be a touch panel display 852 containing the second input device 86). Alternatively or additionally, the numerically controlled lathe 8A may include a second input device (for example, a button, a switch, a lever, a pointing device, and a keyboard) provided separately from the second display device.

In the example illustrated in FIG 9, the second processor 82, the second communication circuit 83, the second memory 84, the second display device 85, and/or the second input device 86 are coupled to each other via a bus 81. The second processor 82 includes at least one processor 82a (for example, at least one CPU).

The second communication circuit 83 receives, from the machining simulation apparatus 1A, the data 43f, which indicates the position of the program origin F1. The second memory 84 stores the data 43f, which indicates the position of the program origin F1 and has been received by the second communication circuit 83. The machining simulation apparatus 1A and the program origin F1 have already been described in the description of the machining simulation apparatus 1A according to the first embodiment, and repetitive descriptions of the machining simulation apparatus 1A and the program origin F1 are therefore omitted.

The second memory 84 is a storage medium from which the second processor 82 is readable. The second memory 84 may include a non-volatile or volatile semiconductor memory, a magnetic disk, or other forms of memory. The non-volatile or volatile semiconductor memory may include, for example, a RAM, a ROM, and a flash memory. The second memory 84 stores a computation program 841, the machining program 42, and data 843 (for example, position data of the machine origin G0 and dimension data that specifies the shape of the workpiece 95).

In the example illustrated in FIG 9, the second memory 84 stores a machining computation program 841a and a second display program 841b. The second memory 84 may be distributed to a plurality of locations. For example, a memory that stores the machining program 42 may be provided separately from a memory that stores the computation program 841 or the data 843.

The second processor 82 sets, based on the position of the program origin F1, the position (refer to FIG 10) of the machining program origin G1 in the machining program coordinate system. The second processor 82 preferably sets the position of the above-described machining program origin G1 to make a relative position (refer to FIG 10) of the machining program origin G1 with respect to the machine origin G0 in the machining program coordinate system equal to a relative position (refer to FIG 4 or 5) of the program origin F1 with respect to the machine model origin F0 in the machining simulation coordinate system.

The second processor 82 determines the movement path of the first tool 98 with respect to the machining program origin G1 in the machining program coordinate system by executing the machining program 42, which is stored in the second memory 84. As used herein, the second processor 82 executing the machining program 42 encompasses the second processor 82 executing the machining program 42 via the machining computation program 841a. In other words, the machining program 42 may be processed (in other words, analyzed) by the second processor 82 executing the machining computation program 841a. The second processor 82 may determine the movement path of the first tool 98 with respect to the machining program origin G1 in the machining program coordinate system, based on the processing (in other words, based on the analysis). The second processor 82 generates, based on the movement path, a movement command 87i to be transmitted to the moving device 87. The movement command 87i (refer to FIG 11), which is generated by the second processor 82, is transmitted to the moving device 87. The second processor 82 generates a rotation command 90i by executing the machining program 42 (for example, by executing the machining program 42 via the machining computation program 841a). The rotation command 90i (refer to FIG 11), which is generated by the second processor 82, is transmitted to the rotary drive device 90.

The rotary drive device 90, which receives the rotation command 90i, causes the spindle 91, the chuck 93, the plurality of jaws 94, and the workpiece 95 to integrally rotate about the first axis AX1. The moving device 87, which receives the movement command 87i, causes the first tool 98 to move along the above-described movement path.

The numerically controlled lathe 8A according to the first embodiment receives data (for example, the data 43f, which indicates the position of the program origin F1) from the machining simulation apparatus 1A, which executes the highly accurate machining simulation. Performing the highly accurate machining simulation in advance omits or simplifies the interference check performed using the numerically controlled lathe 8A. The omission or the simplifying of the interference check at the machining site improves the operating rate of the numerically controlled lathe 8A. Further, an operator workload at the machining site is reduced.

In the numerically controlled lathe 8A according to the first embodiment, the machining program origin G1 is set (refer to FIG 10) in the machining program coordinate system, based on the position of the program origin F1 accurately set by the machining simulation apparatus 1A. This eliminates the need for or simplifies an operation of actually measuring the reference position of the workpiece 95 in order to set the machining program origin. The reduction in preparation work performed at the machining site further improves the operating rate of the numerically controlled lathe 8A. The operator workload at the machining site is further reduced. The consumption of energy involved in the preparation work is reduced. This also reduces load on the environment.

### (Machine Tool System 100A)

Next, the machine tool system 100A according to the first embodiment will be described.

As illustrated in FIG 25, the machine tool system 100A according to the first embodiment includes the machining simulation apparatus 1A and the numerically controlled lathe 8A. The machining simulation apparatus 1A and the numerically controlled lathe 8A are preferably coupled to each other via a network 101 to be communicable with each other. The network 101 may be a corporate network or an external network (for example, the Internet). The machining simulation apparatus 1A and the numerically controlled lathe 8A have already been described, and repetitive descriptions of the machining simulation apparatus 1A and the numerically controlled lathe 8A are therefore omitted.

### (Optional Structures)

Next, with reference to FIGs. 1 to 25, optional structures adaptable to the machining simulation apparatus 1A, the numerically controlled lathe 8A, or the machine tool system 100A according to the first embodiment will be described.

### (Displaying of Offset Amount T1)

The processor 2 (more specifically, the program origin setting unit 22) may calculate the offset amount T1. The offset amount T1 indicates the relative position of the program origin F1.

In the example illustrated in FIG 5, the offset amount T1 is an offset amount of the program origin F1 in the machining simulation coordinate system with respect to the reference point F2 (for example, the reference workpiece model origin), which is positionally fixed with respect to the machine model origin F0 in the machining simulation coordinate system. The offset amount T1 is an offset amount (that is, a z-offset amount) in a z-axis direction (in other words, a direction along the rotation axis AT of the chuck model 93m).

Alternatively, as illustrated in FIG 4, the offset amount T1 may be an offset amount of the program origin F1 in the machining simulation coordinate system with respect to the machine model origin F0 in the machining simulation coordinate system. The offset amount T1 is the offset amount (that is, the z-offset amount) in the z-axis direction (in other words, the direction along the rotation axis AT of the chuck model 93m).

In an example illustrated in FIG 12, the processor 2 causes the display device 5 to display the above-described offset amount T1 by executing the display program 41d, which is stored in the memory 4. With the offset amount T1 being displayed on the display device 5, it is possible for the operator to numerically check the relative position of the program origin F1.

The processor 2 (more specifically, the display image generating unit 25) may cause the display device 5 to display the above-described offset amount T1 in an operator editable form by executing the display program 41d, which is stored in the memory 4. In this case, it is possible for the operator to correct, using the input device 6, the position of the program origin F1 that is automatically set by the processor 2.

As illustrated in FIG 12, the processor 2 may cause the display device 5 to display the above-described offset amount T1, the jaw model 94m, the workpiece model 95m, and an image IM of the program origin F1 at the same time by executing the display program 41d. In this case, it is possible for the operator to easily grasp the offset amount T1, the arrangement of the jaw model 94m and the workpiece model 95m, and the position of the program origin F1.

In the example illustrated in FIG 12, the processor 2 causes the display device 5 to display the assembly model 92m, in which the chuck model 93m, the jaw model 94m, and the workpiece model 95m are assembled, in a three-dimensional display form by executing the three-dimensional model creating program 41a and the display program 41d, which are stored in the memory 4. In this case, it is easy for the operator to intuitively grasp original data used to derive the program origin F1 (or the offset amount T1).

The machining simulation apparatus 1A may transmit, to the numerically controlled lathe 8A, the data indicating the above-described offset amount T1 as the above-described data 43f, which indicates the position of the program origin F1.

### (Setting of Jaw Model 94m)

In an example illustrated in FIG 13, the processor 2 (more specifically, the display image generating unit 25) causes the display device 5 to display the setting window 50B of the jaw model 94m by executing the computation program 41 (more specifically, the display program 41d), which is stored in the memory 4. When the jaw model 94m used last time is to be used as it is, the setting of the jaw model 94m may be omitted.

In the setting window 50B, a specific jaw model (hereinafter, referred to as a specific jaw model 94m-s) may be selected, via the input device 6, out of the plurality of jaw models 94m the shapes of which have already been set. This may cause the selected specific jaw model 94m-s to be determined as the jaw model 94m to be used to set the position of the above-described program origin F1.

Alternatively or additionally, the processor 2 may cause the display device 5 to display the second dimension data 43b, which specifies the shape of the jaw model 94m, in the operator editable form by executing the display program 41d, which is stored in the memory 4. The display device 5 may display, in the setting window 50B, an entry field 501 in which a value of the second dimension data 43b is to be input. The processor 2 may cause the display device 5 to display the jaw model 94m in the three-dimensional display form, a dimension line S2 added to the jaw model 94m in the three-dimensional display form, and the entry field 501 in which the length of the dimension line S2 is to be input, at the same time by executing the computation program 41 (more specifically, the three-dimensional model creating program 41a and the display program 41d), which is stored in the memory 4. The processor 2 may automatically change the shape of the jaw model 94m in the three-dimensional display form and the length of the dimension line S2, based on the value input to the entry field 501, and cause the display device 5 to automatically display the jaw model 94m after the change and the dimension line S2 after the change.

In the example illustrated in FIG 13, in response to receiving the data for setting the jaw model 94m via the input device 6, the processor 2 determines the second dimension data 43b, which specifies the shape of the jaw model 94m, and stores, in the memory 4, the second dimension data 43b that has been determined. Alternatively, the processor 2 may acquire dimension data of the jaw model created using software such as CAD software via, for example, the communication circuit 3, convert the dimension data to a form compatible with, for example, the three-dimensional model creating program 41a, and store the converted dimension data in the memory 4 as the second dimension data 43b, which specifies the shape of the jaw model 94m.

### (Setting of Workpiece Model 95m)

In an example illustrated in FIG 14, the processor 2 (more specifically, the display image generating unit 25) causes the display device 5 to display the setting window 50C of the workpiece model 95m by executing the computation program 41 (more specifically, the display program 41d), which is stored in the memory 4. In the example illustrated in FIG 14, the processor 2 extracts the workpiece model (hereinafter, referred to as a "designated workpiece model") designated by the machining program 42 by analyzing the machining program 42. The processor 2 causes the display device 5 to display the designated workpiece model as a default model of the workpiece model 95m used for setting the position of the above-described program origin F1 by executing the display program 41d, which is stored in the memory 4. The display device 5 may display dimension data DT1 that specifies the shape of the default model in the operator editable form. For example, the display device 5 may display, in the setting window 50C, an entry field 502 in which a value of the dimension data DT1 is to be changed. When a changing value of the dimension data DT1 is input in the entry field 502, the workpiece model 95m that reflects the changing value is set. When the changing value of the dimension data DT1 is not input in the entry field 502, the default model is set as the workpiece model 95m as it is.

Alternatively or additionally, as illustrated in FIG 15, the processor 2 (more specifically, the display image generating unit 25) may cause the display device 5 to display the workpiece model creation window 50D by executing the computation program 41 (more specifically, the display program 41d), which is stored in the memory 4. In an example illustrated in FIG 15, the processor 2 causes the third dimension data 43c, which specifies the shape of the workpiece model 95m, to be displayed in the operator editable form by executing the display program 41d, which is stored in the memory 4. The display device 5 may display, in the workpiece model creation window 50D, entry fields 503 in which values of the third dimension data 43c are to be input. The processor 2 may display, on the display device 5, the workpiece model 95m in the three-dimensional display form, a dimension line S3 added to the workpiece model 95m in the three-dimensional display form, and an entry field 503 in which the length of the dimension line S3 is to be input, at the same time by executing the computation program 41 (more specifically, the three-dimensional model creating program 41a and the display program 41d), which is stored in the memory 4. The processor 2 may automatically change the shape of the workpiece model 95m in the three-dimensional display form and the length of the dimension line S3, based on values input to the entry fields 503, and cause the display device 5 to automatically display the workpiece model 95m after the change and the dimension line S3 after the change.

In the example illustrated in FIG 15, in response to receiving the data for setting the workpiece model 95m via the input device 6, the processor 2 determines the third dimension data 43c, which specifies the shape of the workpiece model 95m, and stores, in the memory 4, the third dimension data 43c that has been determined. Alternatively, the processor 2 may acquire dimension data of the workpiece model created using software such as CAD software via, for example, the communication circuit 3, convert the dimension data to a form compatible with, for example, the three-dimensional model creating program 41a, and store the converted dimension data in the memory 4 as the third dimension data 43c, which specifies the shape of the workpiece model 95m.

### (Setting of Chuck Model 93m)

In an example illustrated in FIG 16, the processor 2 (more specifically, the display image generating unit 25) causes the display device 5 to display the setting window 50E of the chuck model 93m by executing the computation program 41 (more specifically, the display program 41d), which is stored in the memory 4. When the chuck model 93m used last time is to be used as it is, the setting of the chuck model 93m may be omitted.

In the example illustrated in FIG 16, the processor 2 causes the display device 5 to display the first dimension data 43a, which specifies the shape of the chuck model 93m, in the operator editable form by executing the display program 41d, which is stored in the memory 4. The display device 5 may display, in the setting window 50E, entry fields 504 in which values of the first dimension data 43a are to be input. The processor 2 may display, on the display device 5, the chuck model 93m in the three-dimensional display form, a dimension line S1 added to the chuck model 93m in the three-dimensional display form, and an entry field 504 in which the length of the dimension line S1 is to be input, at the same time by executing the computation program 41 (more specifically, the three-dimensional model creating program 41a and the display program 41d), which is stored in the memory 4. The processor 2 may automatically change the shape of the chuck model 93m in the three-dimensional display form and the length of the dimension line S1, based on values input to the entry fields 504, and cause the display device 5 to automatically display the chuck model 93m after the change and the dimension line S1 after the change.

In the example illustrated in FIG 16, in response to receiving the data for setting the chuck model 93m via the input device 6, the processor 2 determines the first dimension data 43a, which specifies the shape of the chuck model 93m, and stores, in the memory 4, the first dimension data 43a that has been determined. Alternatively, the processor 2 may acquire dimension data of the chuck model created using software such as CAD software via, for example, the communication circuit 3, convert the dimension data to a form compatible with, for example, the three-dimensional model creating program 41a, and store the converted dimension data in the memory 4 as the first dimension data 43a, which specifies the shape of the chuck model 93m.

In an example illustrated in FIG 17, the processor 2 (more specifically, the three-dimensional model creating unit 21) creates the assembly model 92m, in which the chuck model 93m, the jaw model 94m, and the workpiece model 95m are assembled, based on the chuck model 93m that has been set, the jaw model 94m that has been set, and the workpiece model 95m that has been set, by executing the computation program 41 (more specifically, the three-dimensional model creating program 41a), which is stored in the memory 4. Further, the processor 2 (more specifically, the display image generating unit 25) causes the display device 5 to display the assembly model 92m that has been created by executing the computation program 41 (more specifically, the display program 41d), which is stored in the memory 4.

In the example illustrated in FIG 16, the shape of the chuck model 93m is changeable. In this case, in setting the position of the program origin F1, the dimension data of the chuck model 93m is used in addition to the dimension data of the jaw model 94m and the dimension data of the workpiece model 95m.

In an example illustrated in FIG 18, the processor 2 (more specifically, the program origin setting unit 22) sets the position of the program origin F1, which is the origin on the machining simulation coordinate system, based on the machine model origin F0, on the machining simulation coordinate system, that corresponds to the machine origin G0 (refer to FIG 3) of the numerically controlled lathe 8A, and the assembly model 92m (more specifically, the jaw model 94m, the workpiece model 95m, and the chuck model 93m).

In addition to the definition of the "distance L2", the "distance L3", and the "distance L4" in FIG 4, in the example illustrated in FIG 18, the distance between the reference face 910m that is previously set (for example, the distal end face 911m of the shape model 91m of the spindle 91) and a distal end face 931m of the chuck model 93m is defined as a distance L7. The distance between the distal end face 931m of the chuck model 93m and the contact surface between the jaw model 94m and the proximal end face 951m of the workpiece model 95m is defined as a distance L8.

The processor 2 is capable of calculating the above-described distance L7 and the above-described distance L8 using, for example, the position data of the reference face 910m, which is stored in the memory 4, the first dimension data 43a, which is stored in the memory 4 and specifies the shape of the chuck model 93m, and the second dimension data 43b, which is stored in the memory 4 and specifies the shape of the jaw model 94m. Methods for calculating the "distance L2" and the "distance L3" have already been described, and repetitive descriptions of the methods for calculating the distances are therefore omitted. Further, the processor 2 is capable of calculating the above-described distance L4 using a mathematical expression: distance L4 = distance L3 - distance L7 - distance L8 - distance L2. Note that, the distance L4 is calculated using a model in which the bottom of the jaw model 94m is in contact with the proximal end face 951m of the workpiece model 95m.

In the example illustrated in FIG 18, the processor 2 (the program origin setting unit 22) sets the position of the program origin F1 to a position that is moved by the distance L4 from the above-described intersection CP1 toward the distal end face 952m of the workpiece model 95m along the rotation axis AT of the chuck model 93m. In this manner, the processor 2 accurately sets the position of the program origin F1 to a predetermined position of the workpiece model (for example, the intersection CP2 between the above-described rotation axis AT and the distal end face 952m of the workpiece model) regardless of the diversity of the shape of the jaw model, the diversity of the shape of the workpiece model, and the diversity of the shape of the chuck model.

Additionally, as illustrated in FIG 3, when the reference point G2 (for example, the reference workpiece origin) positionally fixed with respect to the machine origin G0 is set, the reference point F2 (for example, the reference workpiece model origin) positionally fixed with respect to the machine model origin F0 may be set in the machining simulation coordinate system (refer to FIG 19). The position data of the reference point F2 may be stored in the memory 4. The reference point F2 (refer to FIG 19) is a point corresponding to the above-described reference point G2 (refer to FIG 3) in the machining simulation coordinate system.

In an example illustrated in FIG 19, the processor 2 (more specifically, the program origin setting unit 22) is capable of calculating the above-described distance L6 using a mathematical expression: distance L6 = distance L3 - distance L7 - distance L8 - distance L2 - distance L5. Note that, methods for calculating the "distance L2", the "distance L3", the "distance L5", the "distance L7", and the "distance L8" have already been described, and repetitive descriptions of the methods for calculating the distances are therefore omitted.

In the example illustrated in FIG 19, the processor 2 (more specifically, the program origin setting unit 22) is capable of setting the position of the program origin F1 to a position that is moved by the distance L6 from the above-described intersection CP3 toward the distal end face 952m of the workpiece model 95m along the rotation axis AT of the chuck model 93m. In this manner, the processor 2 accurately sets the position of the program origin F1 to a predetermined position of the workpiece model (for example, the intersection CP2 between the above-described rotation axis AT and the distal end face 952m of the workpiece model) regardless of the diversity of the shape of the jaw model, the diversity of the shape of the workpiece model, and the diversity of the shape of the chuck model.

The processor 2 sets the position of the above-described program origin F1, based on the machine model origin F0, the jaw model 94m, the workpiece model 95m, and the chuck model 93m. Further, after the position of the program origin F1 is set, the processor 2 (more specifically, the movement path generating unit 23 and the interference checking unit 24) performs the machining simulation of virtually machining the workpiece model 95m using the program origin F1 as the reference position. The operation and the displaying of the machining simulation have already been described, and repetitive descriptions of the operation and the displaying are therefore omitted.

### (Machining Program Origin G1)

In the example illustrated in FIG 9, the second communication circuit 83 of the numerically controlled lathe 8A receives the data 43f, which indicates the position of the program origin F1 (for example, data 430f indicating the offset amount T1 of the program origin F1), from the machining simulation apparatus 1A. The second memory 84 stores the data 43f, which is received by the second communication circuit 83 and indicates the position of the program origin F1 (for example, the data 430f, which indicates the offset amount T1 of the program origin F1).

In the example illustrated in FIG 20, the second processor 82 causes the second display device 85 to display the offset amount T1 of the program origin F1 (in other words, the offset amount T1 of the program origin F1 with respect to the machine model origin F0 or the reference point F2 positionally fixed with respect to the machine model origin F0) by executing the second display program 841b, which is stored in the second memory 84.

The above-described offset amount T1 functions as a default value of the offset amount (hereinafter, referred to as the "second offset amount T2") of the machining program origin G1 with respect to the machine origin G0 or the reference point G2 (refer to FIG. 3) positionally fixed with respect to the machine origin G0. FIG 10 schematically illustrates an example of the second offset amount T2. The second offset amount T2 is an offset amount (that is, a z-offset amount) in the z-axis direction (in other words, a direction along the rotation axis AX of the chuck 93).

The above-described offset amount T1 that has been set in the machining simulation apparatus 1A functions as the default value of the above-described second offset amount T2 to be set in the numerically controlled lathe 8A. This omits or simplifies the setting operation of the above-described second offset amount T2 in the numerically controlled lathe 8A (for example, the second offset amount T2 is set without actually measuring the reference position of the workpiece 95).

As illustrated in FIG 20, the second processor 82 may cause the second display device 85 to display the above-described offset amount T1 (in other words, the default value DD of the second offset amount) in the operator editable form by executing the display program 41d, which is stored in the memory 4. The second display device 85 may display an entry field 853 in which the default value DD of the second offset amount T2 is to be changed to another value. Inputting a numerical value to the entry field 853 and operating a change operation portion 858a (more specifically, a change operation image displayed on the display device 5) cause the second offset amount T2 to be changed to the numerical value input to the entry field 853 from the default value DD.

The second processor 82 sets (refer to FIG 10) the position of the machining program origin G1, based on the second offset amount T2 and the machine origin G0 or the reference point G2 positionally fixed with respect to the machine origin G0. Further, the second processor 82 determines the movement path of the first tool 98 with respect to the machining program origin G1 in the machining program coordinate system by executing the machining program 42, which is stored in the second memory 84 (for example, by executing the machining program 42 via the machining computation program 841a). Further, the second processor 82 generates, based on the movement path, the movement command 87i to be transmitted to the moving device 87. The movement command 87i (refer to FIG 11), which is generated by the second processor 82, is transmitted to the moving device 87. The second processor 82 generates the rotation command 90i by executing the machining program 42 (for example, by executing the machining program 42 via the machining computation program 841a). The rotation command 90i (refer to FIG 11), which is generated by the second processor 82, is transmitted to the rotary drive device 90. This causes the first tool 98 to move along the movement path, and the workpiece 95 to be machined by the first tool 98.

### (Usage of Jaw Model 94m and Workpiece Model 95m)

The second communication circuit 83 of the numerically controlled lathe 8A may receive, from the machining simulation apparatus 1A, the second dimension data 43b, which specifies the shape of the jaw model 94m, and the third dimension data 43c, which specifies the shape of the workpiece model 95m. Additionally, the second communication circuit 83 may receive, from the machining simulation apparatus 1A, the first dimension data 43a, which specifies the shape of the chuck model 93m.

As illustrated in FIG 9, the second memory 84 may store the second dimension data 43b, which specifies the shape of the jaw model 94m and is received via the second communication circuit 83, as default data (hereinafter, referred to as the "first default data DD1") of a fifth dimension data 843b. The fifth dimension data 843b specifies the shape of the jaw 94. The second memory 84 may store the third dimension data 43c, which specifies the shape of the workpiece model 95m and is received via the second communication circuit 83, as default data (hereinafter, referred to as the "second default data DD2") of a sixth dimension data 843c. The sixth dimension data 843c specifies the shape of the workpiece 95. Further, the second memory 84 may store the first dimension data 43a, which specifies the shape of the chuck model 93m and is received via the second communication circuit 83, as default data (hereinafter, referred to as "third default data DD3") of a fourth dimension data 843a. The fourth dimension data 843a specifies the shape of the chuck 93.

As illustrated in FIG 20, the second processor 82 may cause the second display device 85 to display an assembly 92 in which the chuck 93, the jaw 94, and the workpiece 95 are assembled in the three-dimensional display form, based on the default data (DD1, DD2, and DD3) by executing the second display program 841b, which is stored in the second memory 84. The second display device 85 may display a three-dimensional image of the assembly 92 and an image IM2 indicating the machining program origin G1 at the same time. The image IM2 will be described later.

In an example illustrated in FIG 21, the second processor 82 causes the second display device 85 to display the first default data DD1, which specifies the shape of the jaw 94, in the operator editable form by executing the second display program 841b, which is stored in the second memory 84. The second display device 85 may display an entry field 854 in which a value of the first default data DD1 is to be changed to another value. Inputting a numerical value to the entry field 854 and operating a change operation portion 858b (more specifically, a change operation image displayed on the second display device 85) cause the fifth dimension data 843b, which specifies the shape of the jaw 94, to be changed based on the numerical value input to the entry field 854.

As illustrated in FIG 22, the second processor 82 may cause the second display device 85 to display the message MG1, which recommends to execute the machining simulation again, in response to changing of any of values of the first default data DD1 over a permissible value that has been previously set. In other words, the second processor 82 may cause the second display device 85 to display the message MG1, which recommends to execute the machining simulation again, in response to exceeding of a deviation amount of the shape of the jaw 94 with respect to the shape of the jaw model 94m over a permissible amount. In this case, the operator preferably performs resetting of the assembly model 92m, which includes the jaw model 94m and the workpiece model 95m, resetting of the program origin F1, and re-execution of the machining simulation using the machining simulation apparatus 1A.

In an example illustrated in FIG 23, the second processor 82 causes the second display device 85 to display the second default data DD2, which specifies the shape of the workpiece 95, in the operator editable form by executing the second display program 841b, which is stored in the second memory 84. The second display device 85 may display entry fields 855 in which values of the second default data DD2 are to be changed to other values. Inputting numerical values to the entry fields 855 and operating a change operation portion 858c (more specifically, a change operation image displayed on the second display device 85) change the sixth dimension data 843c, which specifies the shape of the workpiece 95, based on the numerical values input to the entry fields 855.

As illustrated in FIG 24, the second processor 82 may cause the second display device 85 to display the message MG2, which recommends to execute the machining simulation again, in response to changing of any of values of the second default data DD2 over a permissible value that has been previously set. In other words, the second processor 82 may cause the second display device 85 to display the message MG2, which recommends to execute the machining simulation again, in response to exceeding of a deviation amount of the shape of the workpiece 95 with respect to the shape of the workpiece model 95m over a permissible amount. In this case, the operator preferably performs resetting of the assembly model 92m, which includes the jaw model 94m and the workpiece model 95m, resetting of the program origin F1, and re-execution of the machining simulation using the machining simulation apparatus 1A.

### (Machining Simulation Method and Computation Program 41)

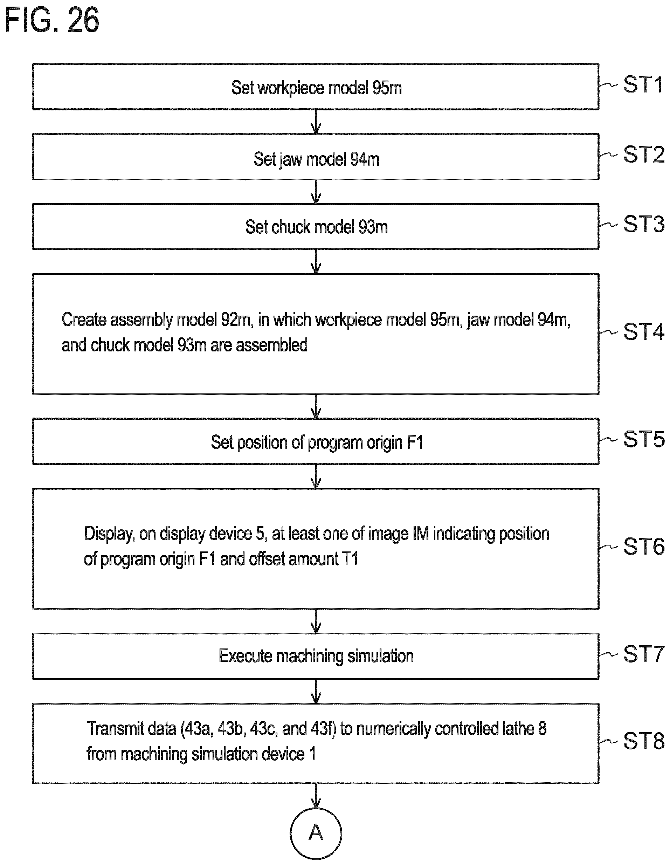

The machining simulation method according to the first embodiment will be described with reference to FIGs. 1 to 26. FIG 26 is a flowchart illustrating an example of the machining simulation method according to the first embodiment.

As illustrated in FIG 20, the second computation device 82 may cause the second display device 85 to display the above-described offset amount T1 (in other words, the default value DD of the second offset amount T2) in the operator editable form by executing the display program 41d, which is stored in the memory 4. The second display device 85 may display an entry field 853 in which the default value DD of the second offset amount T2 is to be changed to another value. Inputting a numerical value to the entry field 853 and operating a change operation portion 858a (more specifically, a change operation image displayed on the display device 5) cause the second offset amount T2 to be changed to the numerical value input to the entry field 853 from the default value DD.

The machining simulation method according to the first embodiment is executed using the machining simulation apparatus 1A according to the first embodiment or another machining simulation apparatus. The machining simulation apparatus 1A according to the first embodiment has already been described, and a repetitive description of the machining simulation apparatus 1A according to the first embodiment is therefore omitted.

At a first step ST1, the workpiece model 95m is set. The first step ST1 is a first setting step. The first setting step includes determining, by the processor 2 of the machining simulation apparatus 1, the third dimension data 43c, which specifies the shape of the workpiece model 95m, and storing, by the memory 4, the third dimension data 43c that has been determined.

As illustrated in FIG 14, the first setting step may include extracting, by the processor 2, the workpiece model 95m designated by the machining program 42 by analyzing the machining program 42, and determining, by the processor 2, the third dimension data 43c, which specifies the shape of the workpiece model 95m, based on the workpiece model 95m that has been extracted. Alternatively, as illustrated in FIG 15, the first setting step may include determining, by the processor 2, the third dimension data 43c, which specifies the shape of the workpiece model 95m, in response to receiving the data for setting the workpiece model 95m via the input device 6. Further alternatively, the first setting step may include reading, by the processor 2, the workpiece model 95m created in the past from the memory 4 and determining, by the processor 2, the third dimension data 43c, which specifies the shape of the workpiece model 95m, based on the workpiece model 95m that has been read.

The workpiece model 95m may be displayed on the display device 5 during the execution of the first step ST1 or after the execution of the first step ST1. As illustrated in FIG 15, the displaying of the workpiece model 95m on the display device 5 may include displaying the third dimension data 43c, which specifies the shape of the workpiece model 95m, on the display device 5 in the operator editable form. In the example illustrated in FIG 15, the display device 5 displays the workpiece model 95m in the three-dimensional display form, the dimension line S3 added to the workpiece model 95m in the three-dimensional display form, and the entry field 503 in which the length of the dimension line S3 is to be input, at the same time. The processor 2 automatically changes the shape of the workpiece model 95m in the three-dimensional display form and the length of the dimension line S3, based on values input to the entry fields 503, and causes the display device 5 to automatically display the workpiece model 95m after the change and the dimension line S3 after the change.

At a second step ST2, the jaw model 94m is set. The second step ST2 is a second setting step. The second setting step includes determining, by the processor 2, the second dimension data 43b, which specifies the shape of the jaw model 94m, and storing, by the memory 4, the second dimension data 43b that has been determined.

The second setting step may include determining, by the processor 2, the second dimension data 43b, which specifies the shape of the jaw model 94m, in response to receiving the data for setting the jaw model 94m via the input device 6. Alternatively, the second setting step may include reading, by the processor 2, the jaw model 94m created in the past from the memory 4 and determining, by the processor 2, the second dimension data 43b, which specifies the shape of the jaw model 94m, based on the jaw model 94m that has been read.

The jaw model 94m may be displayed on the display device 5 during the execution of the second step ST2 or after the execution of the second step ST2. As illustrated in FIG 13, the displaying of the jaw model 94m on the display device 5 may include displaying the second dimension data 43b, which specifies the shape of the jaw model 94m, on the display device 5 in the operator editable form. In the example illustrated in FIG 13, the display device 5 displays the jaw model 94m in the three-dimensional display form, the dimension line S2 added to the jaw model 94m in the three-dimensional display form, and the entry field 501, in which the length of the dimension line S2 is to be input, at the same time. The processor 2 automatically changes the shape of the jaw model 94m in the three-dimensional display form and the length of the dimension line S2, based on the value input to the entry field 501, and causes the display device 5 to automatically display the jaw model 94m after the change and the dimension line S2 after the change.

The second step ST2 may be executed after the first step ST1 or may be executed before the first step ST1.

At a third step ST3, the chuck model 93m is set. The third step ST3 is a third setting step. The third setting step includes determining, by the processor 2, the first dimension data 43a, which specifies the shape of the chuck model 93m, and storing, by the memory 4, the first dimension data 43a that has been determined.

The third setting step may include determining, by the processor 2, the first dimension data 43a, which specifies the shape of the chuck model 93m, in response to receiving the data for setting the chuck model 93m via the input device 6. Alternatively, the third setting step may include reading, by the processor 2, the chuck model 93m created in the past from the memory 4 and determining, by the processor 2, the first dimension data 43a, which specifies the shape of the chuck model 93m, based on the chuck model 93m that has been read.

The chuck model 93m may be displayed on the display device 5 during the execution of the third step ST3 or after the execution of the third step ST3. As illustrated in FIG 16, the displaying of the chuck model 93m on the display device 5 may include displaying the first dimension data 43a, which specifies the shape of the chuck model 93m, on the display device 5 in the operator editable form. In the example illustrated in FIG 16, the display device 5 displays the chuck model 93m in the three-dimensional display form, the dimension line S1 added to the chuck model 93m in the three-dimensional display form, and the entry field 504 in which the length of the dimension line S1 is to be input, at the same time. The processor 2 automatically changes the shape of the chuck model 93m in the three-dimensional display form and the length of the dimension line S1, based on values input to the entry fields 504, and causes the display device 5 to automatically display the chuck model 93m after the change and the dimension line S1 after the change.

The third step ST3 may be executed after the first step ST1 and the second step ST2 or may be executed before the first step ST1 and the second step ST2. Alternatively, the third step ST3 may be executed between the first step ST1 and the second step ST2. Note that, the third step ST3 may be omitted.

In a fourth step ST4, the processor 2 creates the assembly model 92m, in which the workpiece model 95m, the jaw model 94m, and the chuck model 93m are assembled. The fourth step ST4 is an assembly model creating step. The assembly model creating step preferably includes checking (in other words, a checking step) whether the assembly model 92m that has been created is normal. The checking step includes, for example, checking whether the jaw model 94m has a shape appropriate for gripping the workpiece model 95m. When the assembly model 92m is not normal, the processor 2 may cause the display device 5 to display an alert.

As illustrated in FIG 17, the assembly model 92m created by the assembly model creating step may be displayed on the display device 5.

At a fifth step ST5, the position of the program origin F1, which is the origin on the machining simulation coordinate system, is set. The fifth step ST5 is a program origin setting step. In the example illustrated in FIG 17, the program origin setting step may be configured to be automatically executed by the processor 2 in response to operation of an origin setting operation portion 55 (more specifically, an origin setting operation portion 55a displayed on the display device 5).

As illustrated in FIG 4 or 5, in the program origin setting step, the processor 2 sets the position of the program origin F1, which is the origin on the machining simulation coordinate system, based on the machine model origin F0, on the machining simulation coordinate system, that corresponds to the machine origin G0 of the numerically controlled lathe 8, the jaw model 94m, which is the shape model of the jaw 94 mounted on the chuck 93 of the numerically controlled lathe 8, and the workpiece model 95m, which is the shape model of the workpiece 95 gripped by the plurality of jaws 94.

Further, when the shape of the chuck model 93m is changeable, the processor 2 sets the position of the program origin F1 taking into consideration also the shape of the chuck model 93m. More specifically, as illustrated in FIG 18 or 19, in the program origin setting step, the processor 2 sets the position of the program origin F1, which is the origin on the machining simulation coordinate system, based on the above-described machine model origin F0, the above-described jaw model 94m, the above-described workpiece model 95m, and the chuck model 93m.

A procedure by which the processor 2 sets the position of the program origin F1 has already been described with reference to FIG 4 or 5 (or FIG 18 or 19), and a repetitive description of the procedure is therefore omitted. Note that, data necessary for setting the position of the program origin F1 (for example, the position data of the reference face 910m, the position data 43e of the machine model origin F0, the second dimension data 43b, which specifies the shape of the jaw model 94m, and the third dimension data 43c, which specifies the shape of the workpiece model 95m) is preferably stored in the memory 4 before executing the program origin setting step.

The program origin setting step (the fifth step ST5) preferably includes storing, in the memory 4, the data 43f, which indicates the position of the program origin F1 set by the processor 2. Note that the data 43f, which indicates the position of the program origin F1, may be data indicating the offset amount T1 of the program origin F1 with respect to the machine model origin F0 or the reference point F2, which is positionally fixed with respect to the machine model origin F0.

In a sixth step ST6, at least one of the image IM indicating the position of the program origin F1 set by the processor 2 and the above-described offset amount T1 is displayed on the display device 5 (refer to FIG 12). The sixth step ST6 is a displaying step. The displaying step may include displaying, on the display device 5, the above-described offset amount T1, the jaw model 94m in the three-dimensional display form, the workpiece model 95m in the three-dimensional display form, and the image IM, which indicates the program origin F1, at the same time. The displaying step may include displaying, on the display device 5, the above-described offset amount T1 in the operator editable form. Note that, the displaying step (the sixth step ST6) may be omitted.

At a seventh step ST7, the machining simulation of virtually machining the workpiece model 95m is executed. The seventh step ST7 is a machining simulation execution step. The machining simulation execution step includes performing, by the processor 2 (more specifically, the movement path generating unit 23 and the interference checking unit 24), the machining simulation of virtually machining the workpiece model 95m by executing the machining program 42 using the program origin F1 as the reference position.

The machining simulation execution step includes generating, by the processor 2, the movement path data of the first tool model 98m that performs simulated machining of the workpiece model 95m with respect to the program origin F1 in the machining simulation coordinate system.

As illustrated in FIG 6 or 7, the machining simulation execution step may include displaying, on the display device 5, a moving image of the first tool model 98m and the plurality of models (96m, 97m, 97m-2, and 98m-2) that move together with the first tool model 98m with respect to the workpiece model 95m along the path designated by the above-described movement path data. In the moving image, the simulated machining of the workpiece model 95m by the first tool model 98m is performed.

The machining simulation execution step may include checking, by the processor 2, whether there is an abnormal interference between the first tool model 98m and other plurality of models (for example, the workpiece model 95m and the tailstock model 99m) and between the plurality of models that move together with the first tool model 98m and other plurality of models (for example, the workpiece model 95m and the tailstock model 99m). Further, the machining simulation execution step may include displaying, on the display device 5, a message indicating that there is an abnormal interference when it is determined, by the processor 2, that there is an abnormal interference.

At an eighth step ST8, pieces of data (43a, 43b, 43c, and 43f) are transmitted to the numerically controlled lathe 8 from the communication circuit 3 of the machining simulation apparatus 1. The eighth step ST8 is a data transmission step.

The data transmission step includes transmitting the data 43f (for example, the above-described offset amount T1) from the communication circuit 3 of the machining simulation apparatus 1 to the numerically controlled lathe 8. The data 43f indicates the position of the program origin F1, which is the origin on the machining simulation coordinate system.

Additionally, the data transmission step may include transmitting, from the communication circuit 3 of the machining simulation apparatus 1 to the numerically controlled lathe 8, the second dimension data 43b, which specifies the shape of the jaw model 94m, and the third dimension data 43c, which specifies the shape of the workpiece model 95m. The data transmission step may also include transmitting, from the communication circuit 3 of the machining simulation apparatus 1 to the numerically controlled lathe 8, the first dimension data 43a, which specifies the shape of the chuck model 93m.

Further, the data transmission step may include transmitting, from the communication circuit 3 of the machining simulation apparatus 1 to the numerically controlled lathe 8, data of a result of executing the machining simulation (for example, data indicating that there was no abnormal interference in the machining simulation).

The computation program 41 according to the first embodiment is a program that causes the machining simulation apparatus 1 to execute the machining simulation method according to the first embodiment.

More specifically, the program according to the first embodiment (more specifically, the computation program 41) is a program for causing the machining simulation apparatus 1 to execute the machining simulation method including (1) a step (in other words, the above-described fifth step ST5) of setting the position of the program origin F1, which is the origin on the machining simulation coordinate system, based on the machine model origin F0, on the machining simulation coordinate system, that corresponds to the machine origin G0 of the numerically controlled lathe 8, the jaw model 94m, which is the shape model of the jaw 94 mounted on the chuck 93 of the numerically controlled lathe 8, and the workpiece model 95m, which is the shape model of the workpiece 95 gripped by the plurality of jaws 94, (2) a step (in other words, the above-described seventh step ST7) of performing the machining simulation of virtually machining the workpiece model 95m by executing the machining program 42 using the program origin F1 as the reference position (for example, by analyzing the machining program 42 using the program origin F1 as the reference position), and (3) a step (in other words, the above-described eighth step ST8) of transmitting the data 43f, which indicates the position of the program origin F1 (for example, the above-described offset amount T1), to the numerically controlled lathe 8.

Additionally, the program according to the first embodiment (more specifically, the computation program 41) may be a program for causing the machining simulation apparatus 1 to execute the machining simulation method including the above-described first setting step (the first step ST1) and/or the above-described second setting step (the second step ST2). Alternatively or additionally, the program according to the first embodiment (more specifically, the computation program 41) may be a program for causing the machining simulation apparatus 1 to execute the machining simulation method including the above-described third setting step (the third step ST3). Alternatively or additionally, the program according to the first embodiment (more specifically, the computation program 41) may be a program for causing the machining simulation apparatus 1 to execute the machining simulation method including the above-described assembly model creating step (the fourth step ST4). Alternatively or additionally, the program according to the first embodiment (more specifically, the computation program 41) may be a program for causing the machining simulation apparatus 1 to execute the machining simulation method including the above-described displaying step (the sixth step ST6).

For example, as illustrated in FIG 13, the program (more specifically, the computation program 41) may be a program that causes the machining simulation apparatus 1 to execute the machining simulation method including (1) a step of displaying, on the display device 5, the jaw model 94m in the three-dimensional display form, the dimension line S2 added to the jaw model 94m in the three-dimensional display form, and the entry field 501, in which the length of the dimension line S2 is to be input, at the same time, and (2) a step of automatically changing, based on the value input to the entry field 501, the shape of the jaw model 94m in the three-dimensional display form and the length of the dimension line S2, and automatically displaying, on the display device 5, the jaw model 94m after the changing and the dimension line S2 after the changing.

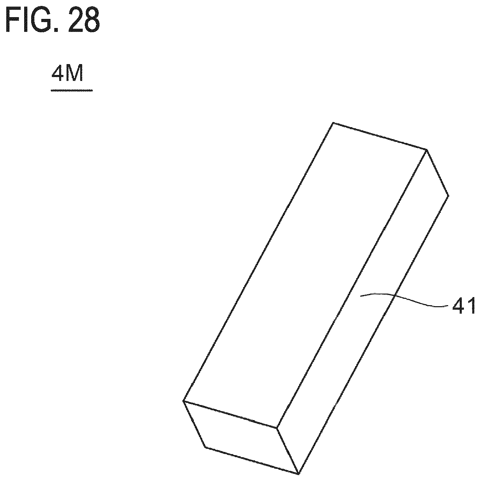

The memory 4 according to the first embodiment may be a non-volatile storage medium that stores the above-described program (more specifically, the computation program 41). The non-volatile storage medium that stores the above-described program (more specifically, the computation program 41) may be a portable storage medium 4M illustrated in FIG. 28.

The machining simulation method, the program (more specifically, the computation program 41), or the non-volatile storage medium that stores the program (more specifically, the computation program 41) according to the first embodiment achieve advantageous effects similar to those achieved by the machining simulation apparatus 1A according to the first embodiment.

### (Workpiece Machining Method)

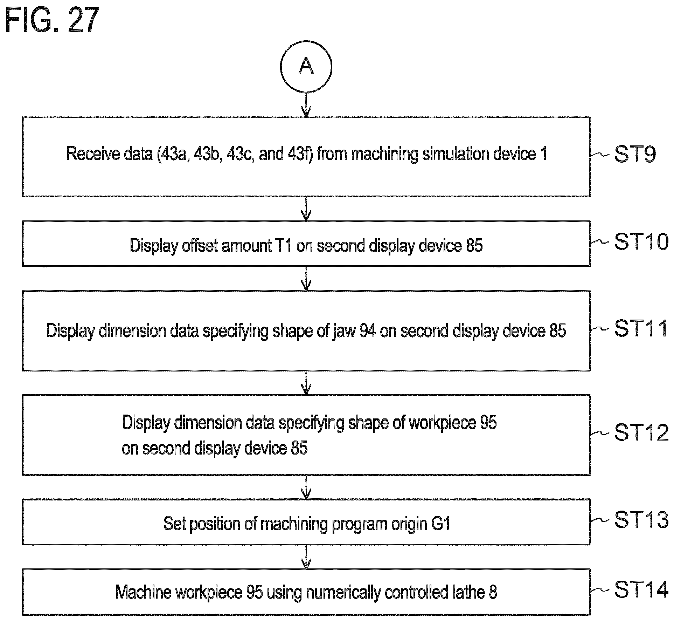

The workpiece machining method according to the first embodiment will be described with reference to FIGs. 1 to 27. FIGs. 26 and 27 are flowcharts illustrating an example of the workpiece machining method according to the first embodiment.

The workpiece machining method according to the first embodiment is executed using the machine tool system 100A according to the first embodiment or another machine tool system. The machine tool system 100A (more specifically, the machining simulation apparatus 1A and the numerically controlled lathe 8A) according to the first embodiment has already been described, and a repetitive description of the machine tool system 100A according to the first embodiment is therefore omitted.

The workpiece machining method according to the first embodiment includes (1) a step (in other words, the above-described fifth step ST5) of setting the position of the program origin F1, which is the origin on the machining simulation coordinate system, based on the machine model origin F0, on the machining simulation coordinate system, that corresponds to the machine origin G0 of the numerically controlled lathe 8, the jaw model 94m, which is the shape model of the jaw 94 mounted on the chuck 93 of the numerically controlled lathe 8, and the workpiece model 95m, which is the shape model of the workpiece 95 gripped by the plurality of jaws 94, (2) a step (in other words, the above-described seventh step ST7) of performing the machining simulation of virtually machining the workpiece model 95m by executing the machining program 42 using the program origin F1 as the reference position, (3) a step (in other words, a thirteenth step ST13 to be described later) of setting the position of the machining program origin G1 in the machining program coordinate system, based on the position of the program origin F1, and (4) a step (in other words, a fourteenth step ST14 to be described later) of machining the workpiece 95 by the numerically controlled lathe 8 that executes the machining program 42 using the machining program origin G1 as the reference position.

The workpiece machining method according to the first embodiment may include the above-described first setting step (the first step ST1) and/or the above-described second setting step (the second step ST2). Alternatively or additionally, the workpiece machining method according to the first embodiment may include the above-described third setting step (the third step ST3). Alternatively or additionally, the workpiece machining method according to the first embodiment may include the above-described assembly model creating step (the fourth step ST4). Alternatively or additionally, the workpiece machining method according to the first embodiment may include the above-described displaying step (the sixth step ST6). The workpiece machining method according to the first embodiment may include the above-described data transmission step (the eighth step ST8).

The first step ST1 to the eighth step ST8 have already been described in the description for the machining simulation method according to the first embodiment, and repetitive descriptions of the first step ST1 to the eighth step ST8 are therefore omitted.

After the execution of the eighth step ST8, at a ninth step ST9, the second communication circuit 83 of the numerically controlled lathe 8 receives data (43a, 43b, 43c, and 43f) from the machining simulation apparatus 1. The ninth step ST9 is a data receiving step.

In the example illustrated in FIG 9, the data receiving step includes receiving, by the second communication circuit 83 of the numerically controlled lathe 8, the data 43f (for example, the data 430f, which indicates the above-described offset amount T1) from the machining simulation apparatus 1. The data 43f indicates the position of the program origin F1, which is the origin on the machining simulation coordinate system.

Additionally, the data receiving step may include receiving, by the second communication circuit 83 of the numerically controlled lathe 8, the second dimension data 43b, which specifies the shape of the jaw model 94m, and the third dimension data 43c, which specifies the shape of the workpiece model 95m, from the machining simulation apparatus 1. The data receiving step may include receiving, by the second communication circuit 83 of the numerically controlled lathe 8, the first dimension data 43a, which specifies the shape of the chuck model 93m, from the machining simulation apparatus 1.

The data receiving step may include receiving, by the second communication circuit 83 of the numerically controlled lathe 8, data of a result of executing the machining simulation (for example, data indicating that there was no abnormal interference in the machining simulation) from the machining simulation apparatus 1.

The data (43a, 43b, 43c, 43f, and 430f) received via the second communication circuit 83 is stored in the second memory 84. For example, the data 43f, which indicates the position of the program origin F1 (more specifically, the data 430f, which indicates the above-described offset amount T1), is stored in the second memory 84. Further, the first dimension data 43a, which specifies the shape of the chuck model 93m, the second dimension data 43b, which specifies the shape of the jaw model 94m, and the third dimension data 43c, which specifies the shape of the workpiece model 95m, are stored in the second memory 84.

In the example illustrated in FIG 20, at a tenth step ST10, the above-described offset amount T1 is displayed on the second display device 85. The tenth step ST10 is a second displaying step.

More specifically, the second displaying step includes displaying, on the second display device 85, the offset amount T1 of the program origin F1 with respect to the machine model origin F0 or the reference point F2 positionally fixed with respect to the machine model origin F0.

The above-described offset amount T1 functions as the default value DD of the second offset amount T2, which is the offset amount of the machining program origin G1 with respect to the machine origin G0 or the reference point G2 (refer to FIG 10) positionally fixed with respect to the machine origin G0. The above-described offset amount T1 that has been set in the machining simulation apparatus 1 functions as the default value DD of the above-described second offset amount T2 to be set in the numerically controlled lathe 8A. This omits or simplifies the setting operation of the above-described second offset amount T2 in the numerically controlled lathe 8A (for example, allows the second offset amount T2 to be set without actually measuring the reference position of the workpiece 95).

The second displaying step may include displaying, on the second display device 85, the above-described offset amount T1 (in other words, the default value DD of the above-described second offset amount T2) in the operator editable form. In this case, the second displaying step may include displaying, on the second display device 85, a message that recommends to execute the machining simulation again in response to changing of the default value DD over a permissible value that has been previously set.

In the example illustrated in FIG 21, at an eleventh step ST11, the dimension data (more specifically, the fifth dimension data 843b), which specifies the shape of the jaw 94, is displayed on the second display device 85. The eleventh step ST11 is a third displaying step. The data that specifies the shape of the jaw model 94m may be displayed on the second display device 85 as the first default data DD1 of the fifth dimension data 843b. The second display device 85 may display the first default data DD1 in the operator editable form. More specifically, the second display device 85 may display the entry field 854 in which a value of the first default data DD1 is to be changed to another value. Inputting a numerical value to the entry field 854 and operating the change operation portion 858b may cause the fifth dimension data 843b displayed on the second display device 85 to be changed based on the numerical value input to the entry field 854.

As illustrated in FIG 22, the third displaying step (the eleventh step ST11) may include displaying, on the second display device 85, the message MG1 that recommends to execute the machining simulation again in response to changing of any of the values of the first default data DD1 over a permissible value that has been previously set.

In the example illustrated in FIG 23, at a twelfth step ST12, the dimension data (more specifically, the sixth dimension data 843c), which specifies the shape of the workpiece 95, is displayed on the second display device 85. The twelfth step ST12 is a fourth displaying step. The data that specifies the shape of the workpiece model 95m may be displayed on the second display device 85 as the second default data DD2 of the sixth dimension data 843c. The second display device 85 may display the second default data DD2 in the operator editable form. More specifically, the second display device 85 may display the entry fields 855 in which the values of the second default data DD2 are to be changed to other values. Inputting numerical values to the entry fields 855 and operating the change operation portion 858c may cause the sixth dimension data 843c displayed on the second display device 85 to be changed based on the numerical values input to the entry fields 855.

As illustrated in FIG 24, the fourth displaying step (the twelfth step ST12) may include displaying, on the second display device 85, the message MG2 that recommends to execute the machining simulation again in response to changing of any of the values of the second default data DD2 over a permissible value that has been previously set.

The tenth step ST10 to the twelfth step ST12 may be executed in any order. The tenth step ST10 and the twelfth step ST12 may be executed at the same time, or the eleventh step ST11 and the twelfth step ST12 may be executed at the same time. Furthermore, the tenth step ST10 to the twelfth step ST12 may each be omitted.

At the thirteenth step ST13, the position of the machining program origin G1 in the machining program coordinate system is set based on the position of the program origin F1. The thirteenth step ST13 is a machining program origin setting step.

In the example illustrated in FIG 10, the machining program origin setting step includes setting, by the second processor 82, the position of the machining program origin G1 to make the relative position of the machining program origin G1 with respect to the machine origin G0 in the machining program coordinate system equal to the relative position of the program origin F1 with respect to the machine model origin F0 (refer to FIGs. 4, 5, 18, or 19).

The machining program origin setting step may include setting, by the second processor 82, the position of the machining program origin G1 to make the second offset amount T2 of the machining program origin G1 with respect to the machine origin G0 or the reference point G2 positionally fixed with respect to the machine origin G0 equal to the above-described offset amount T1. At the tenth step ST10, when the second offset amount T2 is corrected, the machining program origin setting step may include correcting the position of the machining program origin G1, based on the difference between the second offset amount T2 after the correction and the second offset amount T2 before the correction.

At the fourteenth step ST14, the workpiece 95 is machined by the numerically controlled lathe 8, which executes the machining program 42 using the machining program origin G1 as the reference position. The fourteenth step ST14 is a machining step.

The machining step includes determining the movement path of the first tool 98 with respect to the machining program origin G1. The machining step also includes transmitting, by the second processor 82, the control command to each of the plurality of control target devices (for example, the moving device 87 and the rotary drive device 90).

For example, the machining step includes (1) generating, by the second processor 82, the movement command 87i, based on the movement path of the first tool 98 determined with respect to the machining program origin G1, (2) transmitting, by the second processor 82, the movement command 87i to the moving device 87, and (3) moving, by the moving device 87 that has received the movement command 87i, the first tool 98 along the above-described movement path. The machining step also includes (4) transmitting, by the second processor 82, the rotation command 90i to the rotary drive device 90, and (5) causing the rotary drive device 90 that has received the rotation command 90i to integrally rotate the spindle 91, the chuck 93, the plurality of jaws 94, and the workpiece 95 about the first axis AX1.

In the workpiece machining method according to the first embodiment, a highly accurate machining simulation is executed in advance. The execution of the highly accurate machining simulation in advance omits or simplifies the interference check performed using the numerically controlled lathe 8A. The omission or the simplifying of the interference check at the machining site improves the operating rate of the numerically controlled lathe 8A. Further, an operator workload at the machining site is reduced.

In the workpiece machining method according to the first embodiment, the machining program origin G1 in the machining program coordinate system is set based on the position of the program origin F1, which is the origin on the machining simulation coordinate system and is accurately set by the machining simulation. This eliminates the need for or simplifies an operation of actually measuring the reference position of the workpiece 95 in order to set the machining program origin. The reduction in preparation work performed at the machining site further improves the operating rate of the numerically controlled lathe 8A. The operator workload at the machining site is further reduced. The consumption of energy involved in the preparation work is reduced. This also reduces load on the environment.

It should be clearly understood that the present invention is not limited to the above-described embodiments or modifications, and each of the embodiments or modifications may be deformed or modified as required within the range of the technical ideas obtainable from the present invention. Various techniques used in each of the embodiments or modifications may be applied to other embodiments or modifications unless a technical contradiction arises. Furthermore, any optional structure in each of the embodiments or modifications may be omitted as required.

### Description of the Reference Numeral

1, 1A ... Machining simulation apparatus, 2 ... Processor, 2a ... Processor, 3 ... Communication circuit, 4 ... Memory, 4M ... Storage medium, 5 ... Display device, 6, 6a, 6b ... Input device, 8, 8A ... Numerically controlled lathe, 10 ... Bus, 21 ... Three-dimensional model creating unit, 22 ... Program origin setting unit, 23 ... Movement path generating unit, 24 ... Interference checking unit, 25 ... Display image generating unit, 41 ... Computation program, 41a ... Three-dimensional model creating program, 41b ... Program origin setting program, 41c ... Simulation computation program, 41d ... Display program, 42 ... Machining program, 43 ... Data, 43a ... First dimension data, 43b ... Second dimension data, 43c ... Third dimension data, 43e ... Position data of machine model origin, 43f ... Data indicating position of program origin, 50A ... Simulation image, 50B ... Setting window of jaw model, 50C ... Setting window of workpiece model, 50D ... Workpiece model creation window, 50E ... Setting window of chuck model, 52 ... Display with touch panel, 55, 55a ... Origin setting operation portion, 80 ... Control unit, 81 ... Bus, 82 ... Second processor, 82a ... Processor, 83 ... Second communication circuit, 84 ... Second memory, 85 ... Second display device, 86 ... Second input device, 87 ... Moving device, 87a ... First moving device, 87b ... Second moving device, 87c ... Third moving device, 87i ... Movement command, 88 ... Second rotary drive device, 90 ... Rotary drive device, 90i ... Rotation command, 91 ... Spindle, 91m ... Shape model of spindle, 92 ... Assembly, 92m ... Assembly model, 93 ... Chuck, 93m ... Chuck model, 94 ... Jaw, 94m ... Jaw model, 94m-s ... Specific jaw model, 95 ... Workpiece, 95m ... Workpiece model, 96 ... Tool base, 96m ... Tool base model, 96t ... Turret, 97 ... First tool holding unit, 97-2 ... Other tool holding unit, 97m ... First tool holding unit model, 97m-2 ... Other tool holding unit model, 98 ... First tool, 98-2 ... Other tool, 98m ... First tool model, 98m-2 ... Other tool model, 99m ... Tailstock model, 100, 100A ... Machine tool system, 101 ... Network, 430f ... Data indicating offset amount, 501, 502, 503, 504 ... Entry field, 841 ... Computation program, 841a ... Machining computation program, 841b ... Second display program, 843 ... Data, 843a ... Fourth dimension data, 843b ... Fifth dimension data, 843c ... Sixth dimension data, 852 ... Display with touch panel, 853, 854, 855 ... Entry field, 858a, 858b, 858c ... Change operation portion, 910m ... Reference face, 911m ... Distal end face of shape model of spindle, 931m ... Distal end face of chuck model, 951m ... Proximal end face of workpiece model, 952m ... Distal end face of workpiece model, AT ... Rotation axis of chuck model, AX ... Rotation axis of chuck, AX1 ... First axis, AX2 ... Second axis, DD ... Default value, DD1 ... First default data, DD2 ... Second default data, DD3 ... Third default data, DT1 ... Dimension data that specifies shape of default model, F0 ... Machine model origin, F1 ... Program origin, F2 ... Reference point, G0 ... Machine origin, G1 ... Machining program origin, G2 ... Reference point, IM ... Image indicating program origin, IM2 ... Image indicating machining program origin, S1, S2, S3 ... Dimension line, T1 ... Offset amount, T2 ... Second offset amount

## Claims

1. A machining simulation apparatus (1) comprising:
a processor (2) configured to set a position of a program origin that is an origin on a machining simulation coordinate system, based on a machine model origin, on the machining simulation coordinate system, that corresponds to a machine origin of a numerically controlled lathe (8), a jaw model that is a shape model of a jaw (94) mounted on a chuck (93) of the numerically controlled lathe (8), and a workpiece model that is a shape model of a workpiece (95) to be gripped by a plurality of the jaws (94), and to perform a machining simulation of virtually machining the workpiece model by executing a machining program using the program origin as a reference position; and
a communication circuit (3) configured to transmit data indicating the position of the program origin to the numerically controlled lathe (8).

2. The machining simulation apparatus (1) according to claim 1, further comprising:
a memory (4) configured to store a display program; and
a display device (5),
wherein the processor (2) is configured to cause the display device (5) to display an offset amount of the program origin with respect to the machine model origin or a reference point positionally fixed with respect to the machine model origin by executing the display program stored in the memory (4).

3. The machining simulation apparatus (1) according to claim 2, wherein the processor (2) causes the display device (5) to display the offset amount, the jaw model, the workpiece model, and an image indicating the program origin at a same time by executing the display program stored in the memory (4).

4. The machining simulation apparatus (1) according to any one of claims 1 to 3, wherein the processor (2) is configured to set the position of the program origin, based on the machine model origin, the jaw model, the workpiece model, and a chuck model that is a shape model of the chuck (93), and to perform the machining simulation of virtually machining the workpiece model using the program origin as the reference position.

5. A numerically controlled lathe (8) comprising:
a second communication circuit (83) configured to receive data indicating a position of the program origin from the machining simulation apparatus (1) according to any of the preceding claims;
a second memory (84) configured to store the machining program;
the chuck (93);
the plurality of jaws (94) mounted on the chuck (93) and configured to grip the workpiece (95);
a spindle (91) supporting the chuck (93);
a rotary drive device (90) configured to cause the spindle (91) to rotate about a first axis;
a moving device (87) configured to cause a first tool (98) to move; and
a second processor (82) configured to set a position of a machining program origin in a machining program coordinate system, based on the position of the program origin, and to determine a movement path of the first tool (98) with respect to the machining program origin by executing the machining program.

6. The numerically controlled lathe (8) according to claim 5, wherein the second processor (82) is configured to set the position of the machining program origin to make a relative position of the machining program origin with respect to the machine origin equal to a relative position of the program origin with respect to the machine model origin.

7. The numerically controlled lathe (8) according to claim 5 or 6, further comprising a second display device (85),
wherein the second memory (84) is configured to store a second display program, and
wherein the second processor (82) is configured to cause the second display device (85) to display an offset amount of the program origin with respect to the machine model origin or a reference point positionally fixed with respect to the machine model origin by executing the second display program stored in the second memory (84).

8. The numerically controlled lathe (8) according to claim 7, wherein the offset amount comprises a default value of a second offset amount of the machining program origin with respect to the machine origin or a reference point positionally fixed with respect to the machine origin.

9. The numerically controlled lathe (8) according to claim 5 or 6, further comprising a second display device (85),
wherein the second processor (82) is configured to cause the second display device (85) to display a message that recommends to execute a machining simulation again upon exceeding of at least one of a deviation amount of a shape of the jaw (94) with respect to a shape of the jaw model and a deviation amount of a shape of the workpiece (95) with respect to a shape of the workpiece model over a permissible amount.

10. A machine tool system (100) comprising:
the machining simulation apparatus (1) according to any one of claims 1 to 4; and
the numerically controlled lathe (8) according to any one of claims 5 to 9.

11. A method for machining a workpiece (95), the method comprising:
setting a position of a program origin that is an origin on a machining simulation coordinate system, based on a machine model origin, on the machining simulation coordinate system, that corresponds to a machine origin of a numerically controlled lathe (8), a jaw model that is a shape model of a jaw (94) mounted on a chuck (93) of the numerically controlled lathe (8), and a workpiece model that is a shape model of a workpiece (95) to be gripped by a plurality of the jaws (94);
performing a machining simulation of virtually machining the workpiece model by executing a machining program using the program origin as a reference position;
transmitting data indicating the position of the program origin to the numerically controlled lathe (8);
setting, in the numerically controlled lathe (8) a position of a machining program origin in a machining program coordinate system, based on the received position of the program origin; and
machining the workpiece (95) by the numerically controlled lathe (8) executing the machining program using the machining program origin as a reference position.

12. A program that causes a machining simulation apparatus (1) to execute a machining simulation method, wherein the machining simulation method comprises
setting a position of a program origin that is an origin on a machining simulation coordinate system, based on a machine model origin, on the machining simulation coordinate system, that corresponds to a machine origin of a numerically controlled lathe (8), a jaw model that is a shape model of a jaw (94) mounted on a chuck (93) of the numerically controlled lathe (8), and a workpiece model that is a shape model of a workpiece (95) to be gripped by a plurality of the jaws (94),
performing a machining simulation of virtually machining the workpiece model by executing a machining program using the program origin as a reference position, and
transmitting data indicating the position of the program origin to the numerically controlled lathe (8).

13. The program according to claim 12 that causes the machining simulation apparatus (1) to execute the machining simulation method, wherein the machining simulation method further comprises
displaying, on a display device (5), the jaw model in a three-dimensional display form, a dimension line added to the jaw model in the three-dimensional display form, and an entry field into which a length of the dimension line is to be input, at a same time, and
automatically changing, based on a value input to the entry field, a shape of the jaw model in the three-dimensional display form and the length of the dimension line, and automatically displaying, on the display device (5), the jaw model after the changing and the dimension line after the changing.

## Patentansprüche

1. Bearbeitungssimulationsvorrichtung (1) umfassend:
einen Prozessor (2), der dazu konfiguriert ist, eine Position eines Programmnullpunkts festzulegen, der ein Nullpunkt auf einem Bearbeitungssimulations-Koordinatensystem ist, auf Grundlage eines Maschinenmodellnullpunkts, auf dem Bearbeitungssimulations-Koordinatensystem, der einem Maschinennullpunkt einer numerisch gesteuerten Drehmaschine (8) entspricht, eines Backenmodells, das ein Formmodell einer an einem Spannfutter (93) der numerisch gesteuerten Drehmaschine (8) angebrachten Backe (94) ist, und eines Werkstückmodells, das ein Formmodell eines von einer Vielzahl von Backen (94) festzuklemmenden Werkstücks (95) ist, und eine Bearbeitungssimulation des virtuellen Bearbeitens des Werkstückmodells durch Ausführen eines Bearbeitungsprogramms unter Verwendung des Programmnullpunkts als eine Referenzposition durchzuführen; und
eine Kommunikationsschaltung (3), die dazu konfiguriert ist, Daten, die die Position des Programmnullpunkts angeben, an die numerisch gesteuerte Drehmaschine (8) zu übertragen.

2. Bearbeitungssimulationsvorrichtung (1) gemäß Anspruch 1, ferner umfassend:
ein Speicher (4), der dazu konfiguriert ist, ein Anzeigeprogramm zu speichern; und
eine Anzeigegerät (5),
wobei der Prozessor (2) dazu konfiguriert ist, das Anzeigegerät (5) zu veranlassen, einen Versatzwert des Programmnullpunkts in Bezug auf den Maschinenmodellnullpunkt oder einen in Bezug auf den Maschinenmodellnullpunkt positionsfesten Referenzpunkt durch Ausführen des im Speicher (4) gespeicherten Anzeigeprogramm anzuzeigen.

3. Bearbeitungssimulationsvorrichtung (1) gemäß Anspruch 2, wobei der Prozessor (2) das Anzeigegerät (5) veranlasst, den Versatzwert, das Backenmodell, das Werkstückmodell und ein den Programmnullpunkt anzeigendes Bild durch Ausführen des im Speicher (4) gespeicherten Anzeigeprogramms gleichzeitig anzuzeigen.

4. Bearbeitungssimulationsvorrichtung (1) gemäß einem der Ansprüche 1 bis 3, wobei der Prozessor (2) dazu konfiguriert ist, die Position des Programmnullpunkts auf Grundlage des Maschinenmodellnullpunkts, des Backenmodells, des Werkstückmodells und eines Spannfuttermodells, das ein Formmodell des Spannfutters (93) ist, festzulegen, und die Bearbeitungssimulation eines virtuellen Bearbeitens des Werkstückmodells unter Verwendung des Programmnullpunkts als die Referenzposition durchzuführen.

5. Numerisch gesteuerte Drehmaschine (8) umfassend:
eine zweite Kommunikationsschaltung (83), dazu konfiguriert, Daten, die eine Position des Programmnullpunkts angeben, von der Bearbeitungssimulationsvorrichtung (1) gemäß einem der vorstehenden Ansprüche zu empfangen
einen zweiten Speicher (84), dazu konfiguriert, das Bearbeitungsprogramms zu speichern;
das Spannfutter (93);
die Vielzahl von Backen (94), die an dem Spannfutter (93) angebracht und eingerichtet sind, um das Werkstück (95) festzuklemmen;
eine Spindel (91), die das Spannfutter (93) trägt;
ein Drehantriebsgerät (90), das dazu konfiguriert ist, die Spindel (91) zu veranlassen, um eine erste Achse zu drehen;
ein Bewegungsgerät (87), das dazu konfiguriert ist, ein erstes Werkzeug (98) zu veranlassen, sich zu bewegen; und
ein zweiter Prozessor (82), der konfiguriert ist, um eine Position eines Bearbeitungsprogrammnullpunkts in einem Bearbeitungsprogramm-Koordinatensystem auf Grundlage der Position des Programmnullpunkts festzulegen und durch Ausführen des Bearbeitungsprogramms einen Bewegungspfad des ersten Werkzeugs (98) in Bezug auf den Bearbeitungsprogrammnullpunkt zu bestimmen.

6. Numerisch gesteuerte Drehmaschine (8) nach Anspruch 5, wobei der zweite Prozessor (82) konfiguriert ist, um die Position des Bearbeitungsprogrammnullpunkts so festzulegen, dass eine relative Position des Bearbeitungsprogrammnullpunkts in Bezug auf den Maschinennullpunkt gleich einer relativen Position des Programmnullpunkts in Bezug auf den Maschinenmodellnullpunkt ist.

7. Numerisch gesteuerte Drehmaschine (8) nach Anspruch 5 oder 6, die ferner ein zweites Anzeigegerät (85) aufweist,
wobei der zweite Speicher (84) konfiguriert ist, um ein zweites Anzeigeprogramm zu speichern, und
wobei der zweite Prozessor (82) dazu konfiguriert ist, das zweite Anzeigegerät (85) durch Ausführen des in dem zweiten Speicher (84) gespeicherten Anzeigeprogramms zu veranlassen, einen Versatzwert des Programmnullpunkts in Bezug auf den Maschinenmodellnullpunkt oder einen in Bezug auf den Maschinenmodellnullpunkt positionsfesten Referenzpunkt anzuzeigen.

8. Numerisch gesteuerte Drehmaschine (8) nach Anspruch 7, wobei der Versatzwert einen Standardwert eines zweiten Versatzwerts des Bearbeitungsprogrammnullpunkts in Bezug auf den Maschinennullpunkt oder einen in Bezug auf den Maschinennullpunkt positionsfesten Referenzpunkt umfasst.

9. Numerisch gesteuerte Drehmaschine (8) nach Anspruch 5 oder 6, die ferner ein zweites Anzeigegerät (85) aufweist,
wobei der zweite Prozessor (82) dazu konfiguriert ist, die zweite Anzeigevorrichtung (85) zu veranlassen, eine Meldung anzuzeigen, die empfiehlt, eine Bearbeitungssimulation erneut auszuführen, sobald mindestens einer von einem Abweichungswert einer Form der Backe (94) in Bezug auf eine Form des Backenmodells und einem Abweichungswert der Form des Werkstücks (95) in Bezug auf eine Form des Werkstückmodells einen zulässigen Wert überschreitet.

10. Werkzeugmaschinensystem (100) umfassend:
die Bearbeitungssimulationsvorrichtung (1) nach einem der Ansprüche 1 bis 4; und
die numerisch gesteuerte Drehmaschine (8) gemäß einem der Ansprüche 5 bis 9,

11. Verfahren zum Bearbeiten eines Werkstücks (95), wobei das Verfahren umfasst:
Festlegen einer Position eines Programmnullpunkts, der ein Nullpunkt in einem Bearbeitungssimulations-Koordinatensystem ist, auf Grundlage eines Maschinenmodellnullpunkts in dem Bearbeitungssimulationskoordinatensystem, der einem Maschinennullpunkt einer numerisch gesteuerten Drehmaschine (8) entspricht, eines Backenmodells, das ein Formmodell einer an einem Spannfutter (93) der numerisch gesteuerten Drehmaschine (8) angebrachten Backe (94) ist, und eines Werkstückmodells, das ein Formmodell eines von einer Vielzahl der Backen (94) festzuklemmenden Werkstücks (95) ist;
Durchführen einer Bearbeitungssimulation eines virtuellen Bearbeitens des Werkstückmodells durch Ausführen eines Bearbeitungsprogramms unter Verwendung des Programmnullpunkt als Referenzposition;
Übertragen von Daten, die die Position des Programmnullpunkts angeben, an die numerisch gesteuerte Drehmaschine (8);
Festlegen, in der numerisch gesteuerten Drehmaschine (8), einer Position eines Bearbeitungsprogrammnullpunkts in einem Bearbeitungsprogramm-Koordinatensystem auf Grundlage der empfangenen Position des Programmnullpunkts; und
Bearbeiten des Werkstücks (95) durch die numerisch gesteuerte Drehmaschine (8), durch Ausführen des Bearbeitungsprogramms unter Verwendung des Bearbeitungsprogrammnullpunkts als eine Referenzposition.

12. Ein Programm, das eine Bearbeitungssimulationsvorrichtung (1) dazu veranlasst, ein Bearbeitungssimulationsverfahren auszuführen, wobei das Bearbeitungssimulationsverfahren umfasst
Festlegen einer Position eines Programmnullpunkts, der ein Nullpunkt in einem Bearbeitungssimulations-Koordinatensystem ist, auf Grundlage eines Maschinenmodellnullpunkts in dem Bearbeitungssimulations-Koordinatensystem, der einem Maschinennullpunkt einer numerisch gesteuerten Drehmaschine (8) entspricht, eines Backenmodells, das ein Formmodell einer an einem Spannfutter (93) der numerisch gesteuerten Drehmaschine (8) angebrachten Backe (94) ist, und eines Werkstückmodells, das ein Formmodell eines von einer Vielzahl der Backen (94) festzuklemmenden Werkstücks (95) ist;
Durchführung einer Bearbeitungssimulation des virtuellen Bearbeitens des Werkstückmodells durch Ausführen eines Bearbeitungsprogramms unter Verwendung des Programmnullpunkts als eine Referenzposition, und
Übertragen von Daten, die die Position des Programmnullpunkts angeben, an die numerisch gesteuerte Drehmaschine (8).

13. Programm gemäß Anspruch 12, das die Bearbeitungssimulationsvorrichtung (1) dazu veranlasst, das Bearbeitungssimulationsverfahren auszuführen, wobei das Bearbeitungssimulationsverfahren ferner umfasst
Anzeigen, auf einem Anzeigegerät (5), des Backenmodells in einer dreidimensionalen Anzeigeform, einer dem Backenmodell in der dreidimensionalen Anzeigeform hinzugefügten Maßlinie und eines Eingabefeldes, in das eine Länge der Maßlinie einzugeben ist, zu einer gleichen Zeit, und
automatisches Ändern einer Form des Backenmodells in der dreidimensionalen Anzeigeform und der Länge der Maßlinie auf Grundlage eines in das Eingabefeld eingegebenen Werts und das automatische Anzeigen auf der Anzeigevorrichtung (5) des Backenmodells nach dem Ändern und der Maßlinie nach dem Ändern.

## Revendications

1. Appareil de simulation d'usinage (1) comprenant :
un processeur (2) configuré pour définir une position d'une origine de programme, qui est une origine dans un système de coordonnées de simulation d'usinage, sur la base d'une origine de modèle de machine, dans le système de coordonnées de simulation d'usinage, qui correspond à une origine de machine d'un tour à commande numérique (8), d'un modèle de mors, qui est un modèle de forme d'un mors (94) montée sur un mandrin (93) du tour à commande numérique (8), et d'un modèle de pièce à usiner, qui est un modèle de forme d'une pièce à usiner (95) devant être serrée par une pluralité des mors (94), et pour effectuer une simulation d'usinage d'un usinage virtuel du modèle de pièce à usiner en exécutant un programme d'usinage en utilisant l'origine du programme comme une position de référence ; et
un circuit de communication (3) configuré pour transmettre des données indiquant la position de l'origine de programme au tour à commande numérique (8).

2. Appareil de simulation d'usinage (1) selon la revendication 1, comprenant en outre :
une mémoire (4) configurée pour stocker un programme d'affichage ; et
un dispositif d'affichage (5),
dans lequel le processeur (2) est configuré pour amener le dispositif d'affichage (5) à afficher une valeur de décalage de l'origine du programme par rapport à l'origine de modèle de machine ou à un point de référence fixe en position par rapport à l'origine du modèle de machine en exécutant le programme d'affichage stocké dans la mémoire (4).

3. Appareil de simulation d'usinage (1) selon la revendication 2, dans lequel le processeur (2) amène le dispositif d'affichage (5) à afficher la valeur de décalage, le modèle de mors, le modèle de pièce à usiner et une image indiquant l'origine du programme en même temps en exécutant le programme d'affichage stocké dans la mémoire (4).

4. Appareil de simulation d'usinage (1) selon l'une quelconque des revendications 1 à 3, dans lequel le processeur (2) est configuré pour définir la position de l'origine de programme, sur la base de l'origine de modèle de machine, du modèle de mors, du modèle de pièce à usiner et d'un modèle de mandrin qui est un modèle de forme du mandrin (93), et pour effectuer la simulation d'usinage d'un usinage virtuel du modèle du pièce à usiner en utilisant l'origine du programme comme la position de référence.

5. Tour à commande numérique (8) comprenant :
un deuxième circuit de communication (83) configuré pour recevoir, de l'appareil de simulation d'usinage (1) selon l'une quelconque des revendications précédentes, des données indiquant une position de l'origine du programme ;
une deuxième mémoire (84) configurée pour stocker le programme d'usinage ;
le mandrin (93) ;
la pluralité de mors (94) montées sur le mandrin (93) et configurées pour serrer la pièce à usiner (95) ;
une broche (91) supportant le mandrin (93) ;
un dispositif d'entraînement rotatif (90) configuré pour amener la broche (91) à tourner autour un premier axe ;
un dispositif de déplacement (87) configuré pour amener un premier outil (98) à se déplacer ; et
un deuxième processeur (82) configuré pour définir une position d'une origine de programme d'usinage dans un système de coordonnées de programme d'usinage, sur la base de la position de l'origine de programme, et pour déterminer une voie de déplacement du premier outil (98) par rapport à l'origine du programme d'usinage en exécutant le programme d'usinage.

6. Tour à commande numérique (8) selon la revendication 5, dans lequel le deuxième processeur (82) est configuré pour définir la position de l'origine du programme d'usinage pour faire en sorte qu'une position relative de l'origine de programme d'usinage par rapport à l'origine de la machine soit égale à une position relative de l'origine du programme par rapport à l'origine de modèle de machine.

7. Tour à commande numérique (8) selon la revendication 5 ou 6, comprenant en outre un deuxième dispositif d'affichage (85),
dans lequel la deuxième mémoire (84) est configurée pour stocker un deuxième programme d'affichage, et
dans lequel le deuxième processeur (82) est configuré pour amener le deuxième dispositif d'affichage (85) à afficher une valeur de décalage de l'origine de programme par rapport à l'origine de modèle de machine ou à un point de référence fixe en position par rapport à l'origine de modèle de machine en exécutant le deuxième programme d'affichage stocké dans la deuxième mémoire (84).

8. Tour à commande numérique (8) selon la revendication 7, dans lequel la valeur de décalage comprend une valeur par défaut d'une deuxième valeur de décalage de l'origine de programme d'usinage par rapport à l'origine de machine ou à un point de référence fixe en position par rapport à l'origine de machine.

9. Tour à commande numérique (8) selon la revendication 5 ou 6, comprenant en outre un deuxième dispositif d'affichage (85),
dans lequel le deuxième processeur (82) est configuré pour amener le deuxième dispositif d'affichage (85) à afficher un message recommandant d'exécuter à nouveau une simulation d'usinage lors qu'au moins un parmi une valeur de décalage d'une forme du mors (94) par rapport à une forme du modèle de mors et une valeur de décalage d'une forme de la pièce à usiner (95) par rapport à une forme du modèle de pièce à usiner dépasse une valeur admissible.

10. Système de machine-outil (100) comprenant :
l'appareil de simulation d'usinage (1) selon l'une quelconque des revendications 1 à 4 ; et
Tour à commande numérique (8) selon l'une quelconque des revendications 5 à 9.

11. Procédé pour usiner une pièce à usiner (95), le procédé comprenant :
définir une position d'une origine de programme, qui est une origine dans un système de coordonnées de simulation d'usinage, sur la base d'une origine de modèle de machine, dans le système de coordonnées de simulation d'usinage, qui correspond à une origine de machine d'un tour à commande numérique (8), d'un modèle de mors, qui est un modèle de forme d'un mors (94) montée sur un mandrin (93) du tour à commande numérique (8), et d'un modèle de pièce à usiner, qui est un modèle de forme d'une pièce à usiner (95) devant être serrée par une pluralité des mors (94) ;
effectuer une simulation d'usinage d'un usinage virtuel du modèle de pièce à usiner en exécutant un programme d'usinage en utilisant l'origine de programme comme une position de référence ;
transmettre au tour à commande numérique (8) des données indiquant la position de d'origine de programme ;
définir, dans le tour à commande numérique (8), une position d'une origine de programme d'usinage dans un système de coordonnées de programme d'usinage, sur la base de la position reçue de l'origine de programme ; et
usiner la pièce à usiner (95) par le tour à commande numérique (8) en exécutant le programme d'usinage en utilisant l'origine de programme d'usinage comme une position de référence.

12. Programme qui amène un dispositif de simulation d'usinage (1) à exécuter un procédé de simulation d'usinage, dans lequel le procédé de simulation d'usinage comprend
définir une position d'une origine de programme, qui est une origine dans un système de coordonnées de simulation d'usinage, sur la base d'une origine de modèle de machine, dans le système de coordonnées de simulation d'usinage, qui correspond à une origine de machine d'un tour à commande numérique (8), d'un modèle de mors qui est un modèle de forme d'un mors (94) monté sur un mandrin (93) du tour à commande numérique (8), et d'un modèle de pièce à usiner qui est un modèle de forme d'une pièce à usiner (95) devant être serrée par une pluralité des mors (94),
effectuer une simulation d'usinage d'un usinage virtuel du modèle de pièce à usiner en exécutant un programme d'usinage en utilisant l'origine de programme comme une position de référence, et
transmettre au tour à commande numérique (8) des données indiquant la position de l'origine de programme.

13. Programme selon la revendication 12, qui amène le dispositif de simulation d'usinage (1) à exécuter le procédé de simulation d'usinage, dans lequel le procédé de simulation d'usinage comprend en outre
afficher, sur un dispositif d'affichage (5), le modèle de mors dans une forme d'affichage tridimensionnelle, une ligne de cote ajoutée au modèle de mors dans la forme d'affichage tridimensionnelle, et un champ de saisie dans lequel une longueur de la ligne de cote doit être saisie, en même temps, et
changer automatiquement, sur la base d'une valeur saisie dans le champ de saisie, une forme du modèle de mors dans la forme d'affichage tridimensionnelle et la longueur de la ligne de cote, et afficher automatiquement, sur le dispositif d'affichage (5), le modèle de mors après le changement et la ligne de cote après le changement.
